# EUROPEAN PATENT SPECIFICATION

(11) **EP 3 726 200 B1**
(45) Date of publication and mention of the grant of the patent: **15.02.2023**
(21) Application number: 19208330.1
(22) Date of filing: 11.11.2019
(51) Int. Cl.: G01N 21/37, G01N 21/53

(54) **PARTICLE SENSOR**
TEILCHENSENSOR
CAPTEUR DE PARTICULES

(30) Priority: 15.04.2019 EP 19169282
(43) Date of publication of application: 21.10.2020
(60) Divisional application: 22216940.1
(73) Proprietor: WoePal GmbH, 54311 Trierweiler-Sirzenich (DE)
(72) Inventor: PALZER, Stefan, 54311 Trierweiler-Sirzenich (DE)
(74) Representative: Calysta NV

(56) References cited:
- SCHOLZ LOUISA ET AL: "Miniature Low-Cost Carbon Dioxide Sensor for Mobile Devices", IEEE SENSORS JOURNAL, IEEE SERVICE CENTER, NEW YORK, NY, US, vol. 17, no. 9, May 2017 (2017-05), pages 2889-2895, XP011645739, ISSN: 1530-437X, DOI: 10.1109/JSEN.2017.2682638 [retrieved on 2017-04-10]
- KNOBELSPIES STEFAN ET AL: "Low-cost gas sensing system for the reliable and precise measurement of methane, carbon dioxide and hydrogen sulfide in natural gas and biomethane", SENSORS AND ACTUATORS B: CHEMICAL, ELSEVIER BV, NL, vol. 236, 22 March 2016 (2016-03-22), pages 885-892, XP029700012, ISSN: 0925-4005, DOI: 10.1016/J.SNB.2016.03.022
- VALENTIN WITTSTOCK ET AL: "Design of a LED-based sensor for monitoring the lower explosion limit of methane", SENSORS AND ACTUATORS B: CHEMICAL, vol. 247, August 2017 (2017-08), pages 930-939, XP055633578, NL ISSN: 0925-4005, DOI: 10.1016/j.snb.2017.03.086

## Description

### Field of the invention

The present invention concerns a particle sensor for detecting and/or analysing particles in a fluid.

### Description of related art

A particle concentration in a gas to be analysed can be measured by the absorbed light traversing the gas. However, such solutions are complex, not very robust and require expansive detectors for reducing detection errors.

Therefore, it was suggested in DE730478 to use a pulsed light source which enters in parallel in a first chamber with the gas to be analysed and in a second chamber with a reference gas with a known fixed particle concentration. The pulsed light wave causes in each chamber a pressure wave whose intensity depends on the quantity of the absorbed light. Since absorbed light is proportional to the concentration of the particle, the pressure wave is an indicator for the particle concentration in the respective chamber. Depending on the pressure difference between the two chambers, the particle concentration in the gas to be analysed can be determined. However, also this measurement system is complex and difficult to miniaturize.

The articles "Miniature Low-Cost Carbon Dioxide Sensor for mobile Devices" from Scholz et al, "Low-cost gas sensing system for reliable and precise measurement of methane, carbone dioxide and hydrogen sulfide in natural gas an biomethane" from Knobelspies et al and "Design of a LED-based sensor for monitoring the lower explosion limit of methane" from Wittstock et al disclose a photoacoustic particle sensor.

### Brief summary of the invention

It is object of the present invention to find a simple, small and reliable device for measuring or analysing particles in a fluid.

This object is achieved with a particle sensor according to the independent claims 1, 5 and 8.

Since the electromagnetic wave entering the reference fluid chamber has traversed the detection space, the intensity or amplitude of the electromagnetic wave at the absorption lines of the particle to be detected or analysed depends on the number of particles to be detected in the detection space. The electromagnetic wave having traversed the detection space and entering the reference fluid chamber is absorbed by the reference fluid and thus influences the temperature and thus also the pressure in the reference fluid chamber. If the reference fluid is well chosen such that it absorbs the same or similar absorption lines as the particle to be detected, the pressure or temperature in the reference fluid chamber depends on the intensity or amplitude of the electromagnetic wave at the absorption lines of the particle to be detected or analysed. The reference sensor detects the pressure or temperature in the reference fluid (chamber) which depends on the intensity or amplitude of the electromagnetic wave (at the absorption lines of the particle to be detected) which has traversed the detection space. Since the detector detects thus a plurality of absorption lines of the particle to be detected or analyzed at the same time, the detector is very robust and reliable. Since the reference fluid can be chosen such to detect only the absorption lines of the particle to be detected or analysed, the particle sensor is highly sensitive to the particles to be detected or analysed. This solution is thus reliable and simple and can also well be miniaturized. Since the reference fluid in the reference fluid chamber comprises a chemical particle to be detected or comprises another chemical particle which has similar absorption characteristics for the electromagnetic wave as the chemical particle to be detected, and since either the further reference fluid in the further reference fluid chamber comprises a further chemical particle which does not appear in the fluid to be analysed or which absorbs frequencies of the electromagnetic wave which are not absorbed in the fluid to be analysed, or the electromagnetic wave enters the further reference fluid chamber without traversing the detection space, the chemical particle can be detected independently from intensity fluctuations of the electromagnetic wave based on the pressure or temperature sensed in the reference fluid chamber and based on the further pressure or temperature sensed in the further reference fluid chamber. This allows to detect the particle in the fluid in the detection space without the influence of light fluctuations (even if the absolute concentration of the particle in the fluid in the detection space is detected).

The dependent claims define preferred embodiments.

In one embodiment, the particle sensor comprises a modulator for modulating the electromagnetic wave, wherein the electromagnetic wave (after having traversed the detection space) enters the reference fluid chamber in its modulated form to cause a pressure wave or a temperature wave in the reference fluid chamber. If the electromagnetic wave is modulated according to a modulation scheme, the pressure or temperature wave in the reference fluid chamber follows the modulation scheme of the electromagnetic wave. The modulator can be realised in the intensity control of the emitter or anywhere between the emitter and the reference fluid chamber. Since a pressure or temperature wave can be detected with a higher preciseness, this embodiment is preferred. In addition, this has the advantage that different modulation schemes could be used to detect different characteristics in the same reference fluid chamber.

In one embodiment, the particle sensor comprises a further detector, wherein the further detector comprises a further reference fluid chamber and a further reference sensor, wherein the further reference fluid chamber contains a further reference fluid, wherein the further reference sensor is arranged to sense a further pressure or a further temperature in the further reference fluid chamber, wherein the emitter and the further detector are arranged such that the electromagnetic wave traverses the detection space and that at least a part of the electromagnetic wave which traversed the detection space enters the further reference fluid chamber (to influence the further pressure or temperature in the further reference fluid chamber which is sensed by the further reference sensor or to cause the further pressure or temperature wave which is sensed by the further reference sensor). This allows to detect two particles independent from each other or relative to each other. In one very advantageous embodiment, the controller detects or analyses the particle in the fluid to be analysed based on the pressure or temperature sensed in the further reference fluid chamber and based on the pressure or temperature sensed in the reference fluid chamber. This allows to improve the measurement result for the particle based on a combination of the two detectors. This allows for example to detect ratio between the two detector signals. Such a ratio can be used for determining a relative concentration with respect to two particles or two particle mixtures or an isotope ratio. Such a ratio can further be used to correct the measurement of the particles in the fluid to be analysed from the influence of light intensity fluctuations of the emitter caused by aging or by dirt. However, the combination of the two detector signals can also be used to create a detector signal for the particle with an increased sensitivity range. In one embodiment a relative concentration of the particle(s) in the reference fluid with respect to the particle(s) in the further reference fluid is determined as a ratio of the pressure or the temperature and the further pressure or the further temperature. This can be the ratio of the pressure and the further pressure, the ratio of the temperature and the further temperature, the ratio of the pressure and the further temperature or the ratio of the temperature and the further pressure. This has the advantage that the measurement is independent from light fluctuations of the emitter or of the wave path. This embodiment can also be used to detect one particle to be detected or analysed with a higher sensitivity or with a lower error.

In one embodiment, the reference fluid in the reference fluid chamber comprises a first isotope of a chemical particle and the further reference fluid in the reference fluid chamber comprises a second isotope of the chemical particle, wherein the controller for analysing the particles in the fluid to be analysed is configured to analyse the isotope(s) of the chemical particle based on the pressure or temperature sensed in the reference fluid chamber and on the further pressure or temperature sensed in the further reference fluid chamber. This design allows a very simple, small and reliable device for the analysis of the isotopes of the chemical particle. In one embodiment, the further reference fluid in the reference fluid chamber comprises a mixture of the first isotope, the second isotope and eventually one or more further isotopes of the chemical particle. This allows to detect the isotope ratio of the first isotope with respect to the isotope mixture. In another embodiment, the further reference fluid comprises the second isotope in a pure form or without the first isotope or without further isotopes of the chemical particle. Preferably, the reference fluid in the reference fluid chamber comprises the first isotope of the chemical particle in a pure concentration or without the second isotope or without further isotopes of the chemical particle. The embodiments can be mixed such that either one of the two reference fluid chambers comprises only one isotope without other isotopes of the chemical particle while the other reference fluid chamber comprises a mixture of the isotopes of the chemical particle, or both of the two reference fluid chambers comprises only (a different) one isotope without other isotopes of the chemical particle, or both of the two reference fluid chambers comprises a (different) mixture of the isotopes of the chemical particle. Preferably, the isotope ratio, i.e. the relative concentration of the first isotope with respect to the isotope(s) in the further reference fluid, is determined as a ratio of the pressure and the further pressure or the temperature and the further pressure or the further temperature.

In one embodiment, the controller for detecting the particles in the fluid to be analysed is configured to detect the chemical particle independently from intensity fluctuations of the electromagnetic wave based on the ratio of the pressure or temperature and the further pressure or temperature.

In one embodiment, the reference fluid comprises the particle to be detected or another chemical particle which has similar absorption characteristics for the electromagnetic wave as the chemical particle to be detected, and the further reference fluid comprises the particle to be detected or the other chemical particle which has similar absorption characteristics for the electromagnetic wave as the chemical particle to be detected, wherein the wave path of the electromagnetic wave through the detection space to the reference fluid chamber is longer than the wave path of the electromagnetic wave through the detection space to the further reference fluid chamber, wherein the controller is configured to detect the particle to be detected with a first sensitivity based on the pressure or temperature sensed in the reference sensor and to detect the particle to be detected with a second sensitivity based on the pressure or temperature sensed in the further reference sensor, wherein the first sensitivity is higher than the second sensitivity. This embodiment allows to increase the sensitivity range of the particle sensor. Long wave paths allow a high sensitivity for low particle concentrations but are not able to detect high particle concentrations as all the electromagnetic wave is absorbed in the long wave path before entering in the detector. Short wave paths have a low sensitivity for low particle concentrations but allow to distinguish higher particle concentration. By combining the detector and the further detector with different wave path lengths, the sensitivity range can be increased. In addition, in a potentially overlapping sensitivity range of the two detectors, the error can be reduced due to the double measurement in this range.

In one embodiment, the detector and the further detector are arranged in parallel such that a first portion of the electromagnetic wave which traversed the detection space enters the reference fluid chamber and a second portion of the electromagnetic wave which traversed the detection space and is different from the first portion enters the further reference fluid chamber. The parallel arrangement of the two detectors is particularly advantageous for the embodiment of the light fluctuations described in the previous paragraph, because this guarantees that the same light amount arrives in each detector such that the normalization of the measurement with respect to the light intensity has a lower error. The series arrangement of the two detectors could lead to an influence of the light intensity in the subsequent detector and falsify also the normalized detection result. The parallel arrangement of the detectors could also be used for other embodiments with two detectors.

The previous embodiments were described with two detectors but can obviously also be realised with three or more detectors. The three or more detectors can combine the previous features. For example, having a first and second detectors for detecting two different particles or isotopes and a third detector for normalizing the light intensity and/or a third or fourth detector for extending the sensitivity range of the first and second detector.

In one embodiment, the substrate comprises a hole (in the sense of any recess) sealed on a second side of the substrate by the reference sensor and on a first side of the substrate by a window transparent for at least some frequencies of the electromagnetic wave which traversed the detection space, wherein the hole sealed on both sides of the substrate forms the reference fluid chamber filled with the reference fluid. This embodiment of the detector allows a very simple realisation of the detector which is easy to manufacture, robust under operation and realisable in very small dimensions.

In one embodiment, the emitter and the detector are mounted on the same substrate. Preferably, the emitter and the detector are mounted on a first side of the substrate, wherein a reflector is mounted on the first side of the substrate to reflect the electromagnetic wave from the emitter to the detector.

In one embodiment, the detector and the further detector are arranged on different locations on the substrate, wherein the reflector is formed such to provide a first wave path from the emitter to the detector and a second wave path from the emitter to the further detector, wherein the first wave path and the second wave path have the same path length and/or provide the same light amount to the detector and the further detector.

In one embodiment, the emitted electromagnetic wave is modulated by a modulator to obtain a first modulated electromagnetic wave with a first modulation scheme and the emitted electromagnetic wave is modulated by a further modulator to obtain a second modulated electromagnetic wave with a second modulation scheme, wherein the emitter, the modulator, the further modulator and the detector are arranged such that the first modulated electromagnetic wave enters the reference fluid chamber without having passed the detection space before and causes in the reference fluid chamber a first pressure or temperature wave according to the first modulation scheme, and such that the second modulated electromagnetic wave enters the reference fluid chamber after having traversed the detection space and causes in the reference fluid chamber a second pressure or temperature wave according to the second modulation scheme. Preferably the controller for detecting and/or analysing the particles in the fluid to be analysed is configured to detect and/or analyse the particle independently from intensity fluctuations of the emitted electromagnetic wave based on the first pressure or temperature wave sensed in the reference fluid chamber and on the second pressure or temperature wave sensed in the reference fluid chamber. This embodiment has the advantage that it allows with only one detector to detect or analyse particles without the error produced by wave intensity fluctuations. In one embodiment, the emitter, the modulator, the further modulator and the detector are arranged such that the first modulated electromagnetic wave exits the reference fluid chamber and returns as the second modulated electromagnetic wave back into the reference fluid chamber. In one embodiment, the further modulator is configured to modulate the first modulated electromagnetic wave after the first modulated electromagnetic wave has left the reference fluid chamber and before the first or second modulated electromagnetic wave returns into the reference fluid chamber to obtain the second modulated electromagnetic wave, wherein the first and/or second modulated electromagnetic wave traverses the detection space. In one embodiment, the emitter is arranged in the reference fluid chamber, wherein a reflector reflects the first or second modulated light wave back into the reference fluid chamber.

The particle sensor comprises a controller for detecting or analysing a particle in the fluid to be analysed based on the pressure or temperature wave sensed in the reference fluid chamber

The emitted electromagnetic wave is modulated before entering the reference fluid chamber. In one example, the modulator is realized by the control of the emitter which modulates the intensity of the emitted electromagnetic wave. Preferably, the emitted electromagnetic wave is switched on and off with a modulation frequency. This example is particularly advantageous for a LED emitter or a MEMS-based thermal emitter which can be easily controlled.

In one example, the emitter is a light emitting diode (LED). This has the advantage that that a low energy light source is used and that the emitted light wave can be chosen easily to emit in a desired emission spectrum including the absorption lines of the particles to be analysed. In addition, the light intensity of LEDs can also be modulated faster than thermal emitters.

In one example, a thermal emitter is used as emitter. A thermal emitter is an emitter which emits a black body or grey body radiation depending on the temperature of a thermal element of the thermal emitter. Thermal emitters have normally a larger bandwidth and can thus be advantageous for embodiments, where a large emission bandwidth of the emitter is needed. Preferably, the thermal emitter is a MEMS-based thermal emitter. For certain wavelengths, thermal emitters have the problem that the intensity difference between the thermal element in a switch off state (normally at room temperature at 20°C) and in a switched-on state (e.g. 500 ° C) is not that high. To solve this problem, it is suggested to use a position changing thermal element in combination with a light guide means. The position changing thermal element can be configured to change its position when switched on (compared to the position when switched off). MEMS-based thermal emitters are normally position changing thermal elements. The light guide means can be arranged such that the principal light path of the light guide means guides the light wave 2 from the thermal element in the switched-on state to the detector and/or such that the thermal element in the switched-off state is moved out of the principal light path of the light guide means. This solution improves the intensity modulation even for wavelengths for which the intensity difference of the black body or grey body radiator is not so high.

In one embodiment, the emitter is configured to create an electromagnetic wave with a first emission spectrum modulated with a first modulation scheme and to create a further electromagnetic wave with a second emission spectrum modulated with a second modulation scheme, wherein the reference fluid comprises the particle to be detected or another particle which has similar absorption characteristics for the electromagnetic wave as the particle to be detected, wherein the reference fluid comprises a further particle to be detected or another particle which has similar absorption characteristics for the electromagnetic wave as the further particle to be detected, wherein the controller is configured to detect the particle to be detected based on the pressure or temperature wave according to the first modulation scheme and to detect the further particle to be detected based on the pressure or temperature wave according to the second modulation scheme. This embodiment can obviously also be realised with an emitter creating three or more different electromagnetic waves each with a different emission spectrum and a different modulation scheme. This embodiment can also be combined with the previous embodiment, for example with the embodiment with two or more detectors, e.g. by arranging the emitter or one of the emitters creating the two electromagnetic waves within the reference chamber.

In one embodiment, the emitter configured to create an electromagnetic wave with a first emission spectrum modulated with a first modulation scheme and to create a further electromagnetic wave with a second emission spectrum modulated with a second modulation scheme comprises first emitter emitting the electromagnetic wave with the first emission spectrum and a second emitter for emitting the further electromagnetic wave with the second emission spectrum. However, the two electromagnetic waves with different emission spectra can also be achieved by a single emitter and a first filter arranged in the path of the electromagnetic wave for creating the first emission spectrum and a second filter arranged in the path of the further electromagnetic wave for creating the second emission spectrum. In one embodiment, the emitter comprises a modulator for creating the first modulation scheme and a further modulator for creating the second modulation scheme. In the case of two emitters, the two modulators can be realised by switching the two emitters on and off according to the respective modulation scheme.

In one embodiment, the reference chamber comprises a first reference fluid with a first absorption spectrum and a second reference fluid with a second absorption spectrum. The particle sensor comprises further a frequency spectrum controller which allows to control the frequency spectrum of the electromagnetic wave entered into the reference chamber. The frequency spectrum controller allows to control the electromagnetic wave at different time to be at a first frequency (spectrum) corresponding to at least a part of the first absorption spectrum (preferably not overlapping to the second absorption spectrum) to measure at the reference sensor a first signal and to control the electromagnetic wave to be at a second frequency (spectrum) corresponding to at least a part of the second absorption spectrum (preferably not overlapping to the first absorption spectrum) to measure at the reference sensor a second signal. The controller can then detect a particle based on the first signal and the second signal. Preferably, the first reference fluid in the reference fluid chamber comprises a chemical particle to be detected or comprises another chemical particle which has similar absorption characteristics for the electromagnetic wave as the chemical particle to be detected, and the second reference fluid in the reference fluid chamber comprises a further chemical particle which does not appear in the fluid to be analysed.

The reference fluid can contain the particles to be analysed. This has the advantage that the detector is highly sensible for exactly the absorption lines of the particle to be analysed (in the emission spectrum of the emitter).

### Brief Description of the Drawings

The invention will be better understood with the aid of the figures, in which:
Fig. 1 shows a first exemplary embodiment of the particle sensor
Fig. 2 shows a second exemplary embodiment of the particle sensor
Fig. 3 shows a third exemplary embodiment of the particle sensor
Fig. 4 shows a fourth exemplary embodiment of the particle sensor
Fig. 5 shows a fifth exemplary embodiment of the particle sensor.
Fig. 6 shows a sixth exemplary embodiment of the particle sensor.

### Detailed Description of possible embodiments of the Invention

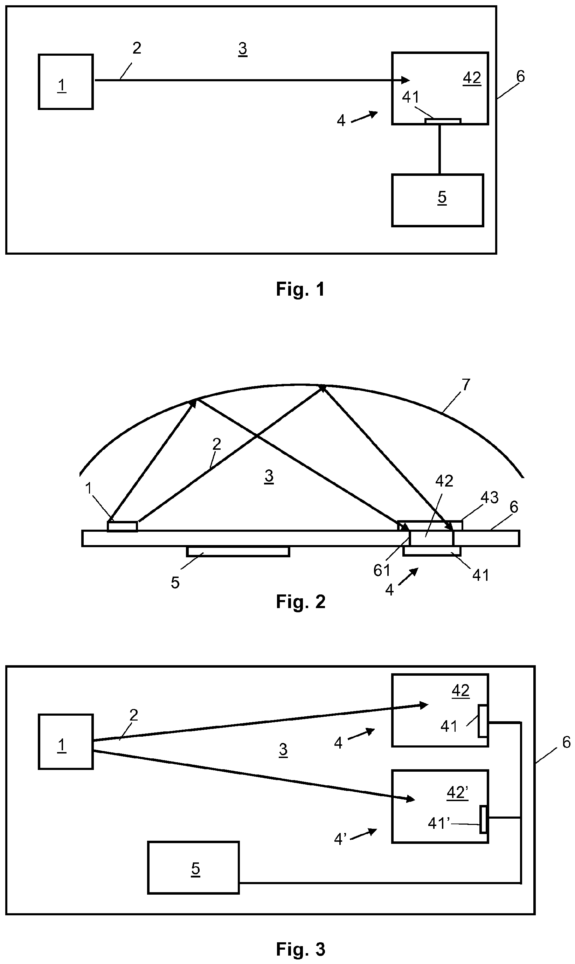

Fig. 1 to 5 show five exemplary embodiments of the particle sensor.

The particle sensor is configured to detect or analyse a particle in a fluid to be analysed. The fluid to be analysed is preferably a gas. In this case, the particle sensor is often also called gas sensor. However, it is also possible that the fluid to be analysed is a liquid. If the particle sensor is called a gas sensor or the reference fluid is called a reference gas, this shall not limit the invention and the disclosure related to the gas sensor and the reference gas shall hold analogously for particle sensors and other reference fluids. A particle is preferably a chemical particle such as an atom or molecule. Molecules should also comprise macromolecules like for example polymers, proteins. The particles can also be a mixture of atoms and/or molecules. However, it is also possible that the particle is a macroscopic particle like smoke, drops, particulate matter or other.

The particle sensor comprises an emitter 1, a modulator, a detection space 3, a detector 4 and a controller 5.

The emitter 1 is configured to emit an electromagnetic wave 2. The electromagnetic wave 2 is preferably a light wave, even more preferably a light wave in the infrared, visible and/or ultraviolet spectrum, i.e. an infrared (IR) light wave, a visible light wave or an ultraviolet (UV) light wave. The emitter 1 is configured preferably to emit an electromagnetic wave with a bandwidth which is larger than one of the absorption lines of the particle to be detected or analysed and/or of the reference fluid, preferably larger than an absorption band comprising a plurality of absorption lines of the particle to be detected or analysed and/or of the reference fluid (broadband emitter). This distinguishes the preferred emitter 1 from a laser whose bandwidth is normally much smaller than one absorption line. The emitter 1 shall emit a light wave 2 comprising the wavelength(s) which is/are absorbed by the particle to be analysed and/or detected and/or by the reference fluid. The emitter 1 is preferably a light emitting diode (LED) and/or a semiconductor diode (cold broadband emitter). However, it is also possible to use a thermic emitter which emits a black body or grey body radiation depending on the temperature of the emitter (warm broadband emitter). However, it would also be possible to use a laser or other source as emitter 1. The emitter 1 can also comprise more than one emitter, e.g. to have a higher light intensity (two emitter with the same emission spectrum) or to increase the emission spectrum (two emitter with two different emission spectrums). The electromagnetic wave emitted by the emitter 1 is strictly speaking a combination of a plurality of electromagnetic waves comprising different wavelengths and different phases and maybe different other wave characteristics. However, for simplicity the combination of electromagnetic waves emitted by the emitter 1 and forming the emission spectrum of the emitter 1 is just called electromagnetic wave. Subsequently, the electromagnetic wave is for simplicity referred as light wave without restricting the invention to light waves.

The modulator is configured to modulate the light wave 2 emitted by the emitter 1. The modulation is preferably an intensity modulation of the light wave 2. However, other modulation schemes are also possible, For example, the emission spectrum could be periodically shifted out of the absorption lines (frequency modulation). Preferably, the modulator is realized by the electronic control of the emitter 1 by electronically changing the light intensity of the emitted light wave 2 in the emitter 1. Preferably, this can be achieved by regulating the current and/or voltage of the emitter, e.g. by switching the emitter 1 on and off. The regulation of the current and/or voltage of the emitter 1 and/or the switching of the emitter 1 is preferably done with a modulation frequency. However, the intensity or amplitude of the emitted light wave 2 can also be switched between a first intensity or amplitude and a second intensity or amplitude or with a more complex modulation form including more than one modulation frequency. Thus, the emitted light wave 2 is chopped or pulsed with the modulation frequency. It is further possible to change the intensity or amplitude more continuously like in a sinusoidal signal. However, it is also possible to have a modulator outside of the emitter which modulates the emitted light wave 2 between the emitter 1 and the detector 2. This can be achieved by a chopper or a vibrating reflector or by (a coating of) a reflector whose reflectivity can be controlled/varied or by (a coating of) a window whose transparency, absorption and/or refraction value can be controlled/varied. The modulator can also be realised by moving the emitter 1 or a thermal element of the emitter 1 in and out of a principal light path of a light guide means. The modulation of the emitted light wave 2 can be realized before, in or after the detection space 3. Preferably, the modulation of the emitted light wave 2 should have been done before the light wave 2 enters (the reference fluid chamber 42 of) the detector 4. In the case that the emitter 1 is arranged in (a reference fluid chamber 42 of) the detector 4 or the light wave 2 emitted from the emitter 1 traverses (the reference fluid chamber 42 of) the detector 4 before entering the detection space 3, modulating the light wave 2 before the detector 4 shall then mean before the light wave 2 enters again in the (reference fluid chamber 42 of the) detector 4 for the detection and/or analysis of the particles in the fluid to be analysed in the detection space 3.

The detection space 3 is configured to be filled with the fluid to be analysed. Preferably, the detection space 3 is open and/or is in fluid connection with the ambient fluid. However, it is also possible to have a closed chamber with the fluid to be analysed forming the detection space 3. The fluid to be analysed and the fluid in the detection space 3 are used as synonyms in here.

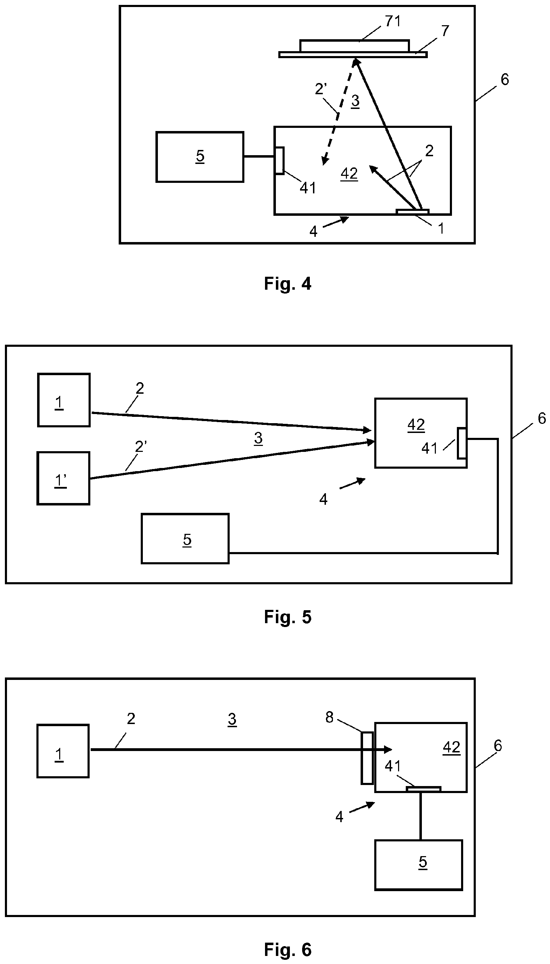

The emitter 1, the detection space 3 and the detector 4 are arranged such that the light wave 2 traverses the detection space 3 before it enters the detector 4. In the case that the emitter 1 is arranged in (a reference fluid chamber 42 of) the detector 4 (as shown in Fig. 4) or the light wave 2 emitted from the emitter 1 traverses (the reference fluid chamber 42 of) the detector 4 before entering the detection space 3, the light wave 2 traverses the detection space 3 before entering the detector 4 shall then mean the light wave 2 traverses the detection space 3 before entering again in the (reference fluid chamber 42 of the) detector 4 for the detection and/or analysis of the particles in the fluid to be analysed in the detection space 3. Thus, the emitter 1, the detection space 3 and the detector 4 are arranged such that (at least a part of) the light wave 2 which traversed the detection space 3 enters in (the reference fluid chamber 42 of) the detector 4. The term "traversing" the detection space 3 shall not infer any specific path of the light wave 2 in the detection space 3. The light wave 2 traversing the detection space 3 can take any path through the detection space 3. The light wave 2 can for example enter on one side and exit on the other opposite side or can enter on the same side as it exits, e.g. when the light wave 2 is reflected by a reflector 7.

In one embodiment, the particle sensor comprises further a light guide means for guiding the light wave 2 from the emitter 1 through the detection space 3 to the detector 4. In one embodiment, the light guiding means can comprise a reflector 7 as shown in Fig. 2 which reflects the light wave 2 from the emitter 1 to the detector 4. In one embodiment, the light guide means can comprise focus means to focus the light wave 2 on the detector 4 to increase the amount of light in the detector 4. In a preferred embodiment, the reflector 7 is formed such to focus the light wave 2 on the detector 4. Preferably, the reflector 7 has an ellipsoidal form. However, the particle sensor could also have no light guide means or could have other then the described light guide means, e.g. a light tube.

In one embodiment, the particle sensor could comprise a structure which preferably fixes the positional relationship between the emitter 1 and the detector 4 such that the light path of the light wave 2 through the detection space 3 is always the same. Preferably, the emitter 1 and the detector 4 (and maybe the light guide means) are mounted on the same structure. The structure is preferably a (single) substrate 6. The substrate is a structure which extends principally in one plane and is configured to connect the emitter 1 and the detector 4 electronically. The substrate is preferably a printed circuit board (PCB). However, the substrate 6 could also be a wafer layer or another layer used in stacking wafer layers or used to mount a wafer layer(s) or a chip. Mounting the emitter 1 and the detector 4 on the same substrate has the advantage that the substrate 6 realises the support function and the function of the electrical connection of the emitter 1 and the detector 4 at the same time. If the controller 5 is also mounted on the substrate 6, the whole particle sensor can be realised on one substrate 6. Preferably, a reflector 7 is arranged above and/or on the structure, preferably the substrate 6 such that the light wave 2 emitted from the emitter 1 is reflected back on the detector 4. In this case, the detection space 3 is realized between the reflector 7 and the substrate 2. An example for such an embodiment is shown in Fig. 2. In an alternative embodiment, the emitter 1 and the detector 4 are not both mounted on the same substrate 6, but the emitter 1 is arranged directly in the detector 4 as explained in more detail below in the context of Fig. 4. This allows to avoid the substrate 6 or to mount the package of emitter 1 and the detector 4 on the substrate 6. In a further alternative embodiment, the emitter 1 is arranged on a first substrate, the detector 4 is arranged on a second substrate and the two substrates are connected by a connection structure which arrange the emitter 1 and the detector 4 in a preferably fixed relationship. The first and second substrate and the connection structure forms then the structure defined above.

The detector 4 comprises a pressure wave sensor 41 and a reference fluid chamber 42.

The pressure wave sensor 41 is configured to detect a pressure wave in the reference fluid chamber 42. The pressure wave sensor 41 is preferably a microphone. However, it is also possible to use different pressure wave sensors than microphones. The pressure wave sensor 41 is preferably a MEMS device, preferably a MEMS microphone. The pressure wave sensor 41 is configured to detect pressure waves in the reference fluid chamber 42 at the modulation frequency or, in case that there are more modulation frequencies, at the modulation frequencies.

The reference fluid chamber 42 contains a reference fluid. The reference fluid is preferably a gas. However, it is also possible that the reference fluid is a liquid. The reference fluid, gas or liquid can comprise just one particle species or a mixture of many particle species. The reference fluid comprises preferably the particle to detect and/or to be analysed. In one embodiment, the reference fluid is the pure fluid of the particle, i.e. the fluid of the particle without a mixture with other particles. The pure fluid of the particle shall include also the pure fluid of the particles with neglectable contaminations with other particles. In one embodiment, the reference fluid comprises a mixture of the particle to detect and/or to be analysed with a support particle or a support fluid, e.g. an inert gas. Preferably, the absorption lines of the support fluid or particle has preferably no or few overlap with the particles present in the fluid to be analysed. The particle to be analysed and/or detected can be for example a chemical particle like a molecule, e.g. carbon dioxide (CO2) or methane (CH4). In this case, the reference fluid contains preferably this chemical particle, preferably with a concentration of at least 50 %vol or %wt, preferably of at least 60 %vol or %wt, preferably of at least 70 %vol or %wt, preferably of at least 80 %vol or %wt, preferably of at least 90 %vol or %wt, preferably of at least 95 %vol or %wt. However, also a lower concentration would be possible. If several chemical particles shall be analysed without the need to distinguish between them, it is also possible to have a mixture of those chemical particles in the reference fluid in the reference fluid chamber 42. In some embodiments, it is also possible to detect distinguishably two different (chemical) particles mixed in the same reference fluid. This could be the case for example, when several flammable and/or poisonous chemical particles shall be detected. In this case, the reference fluid contains preferably this mixture of chemical particles, preferably with a concentration of the mixture with respect of the other particles in the reference fluid of at least 50 %vol or %wt, preferably of at least 60 %vol or %wt, preferably of at least 70 %vol or %wt, preferably of at least 80 %vol or %wt, preferably of at least 90 %vol or %wt, preferably of at least 95 %vol or %wt. However, also a lower concentration would be possible. However, the reference fluid can comprise also a mixture of the particle to be analysed and/or detected with a support liquid which preferably has in the emission spectrum of the emitted light wave 2 no absorption lines in common with the liquid to be analysed. The reference fluid has preferably a stable (including also meta-stable) or fixed composition. However, it is also possible to have unstable reference fluids. For chemical particles with long half-lifes like for example the unstable ¹⁴C isotope, this does not cause a real problem. For unstable chemical particles with short half-life times, the changing composition of the reference fluid due to the unstable chemical particles in the reference fluid could be compensated by the controller 5. The reference fluid chamber 42 is preferably sealed. The reference fluid chamber 42 is preferably not in fluid connection with the detection space 3. Instead of inserting the particle(s) to be analysed and/or detected in the reference fluid chamber 42, it is also possible to insert particles which have at least some overlapping absorption wavelengths. However, it is preferred to use the same particles in the reference fluid as the particles to be analysed and/or detected. The reference fluid chamber 4 comprises a window 43 or any other transparent means for receiving the modulated light wave 2 which traversed the detection space 3. This window 43 or transparent means is at least for some of the relevant wavelengths of the particles in the reference fluid chamber 42 transparent. If the reference fluid has different state of matters in the temperature range in which the sensor should be used, the detector 4 and/or the reference fluid chamber 42 could comprise temperature means to measure, regulate and/or change the temperature. The temperature means could comprise a temperature sensor which measures detects, if the temperature in the reference fluid chamber 42 decreases under a lower threshold temperature (under which the reference fluid takes another state of matter) and/or increases over an upper threshold temperature (over which the reference fluid takes another state of matter). The temperature means could comprise a temperature means to heat the reference fluid (e.g. if the temperature in the reference fluid falls under the lower threshold temperature) and/or to cool the reference fluid (e.g. if the temperature in the reference fluid goes above the upper threshold temperature). This allows to use the particle sensor in a larger temperature range.

When the detector 4 receives now the modulated light wave 2, the modulated wave 2 creates a pressure wave in the reference fluid chamber 42 which provides information on the intensity or amplitude of the light wave 2 at the wavelengths which are absorbed by the particles in the reference fluid in the reference fluid chamber 42. This pressure wave has the frequency of the modulation frequency of the modulation of the light wave 2. If the modulation scheme of the light wave 2 is more complex, the pressure wave has the wave characteristics corresponding to the modulation scheme of the light wave 2. The intensity and/or the amplitude of the pressure wave is thus related (or proportional) to the intensity and/or amplitude of the wavelengths of the light wave 2 entering the reference fluid chamber 42 which (the wavelengths) are absorbed by the particles in the reference fluid chamber 42. The intensity and/or the amplitude of the pressure wave is sensed by the pressure wave sensor 41. Thus, this detector 2 is highly sensitive to the absorption wavelengths of the particles in the reference fluid without the need of any additional optical filters. Therefore, a highly reliable detector 4 with low complexity can be provided. For simplicity and brevity, the wavelengths of the emitted light wave 2 which are absorbed by the particles to be analysed and/or detected are called absorption lines. If the particles to be analysed and/or detected and the particles in the reference fluid are not the same, the absorption lines shall refer to the wavelengths of the emitted light wave 2 which are absorbed by the particles to be analysed and/or detected and by the particles of the reference fluid. Resuming, the detector 4 is thus configured to detect (an intensity or amplitude of) a pressure wave in the reference fluid which is related or proportional to (the intensity or amplitude of) the wavelengths of the light wave 2 which correspond to the absorption lines.

One preferred embodiment of realizing the detector 4 is shown in Fig. 2. A hole 61 in the substrate extends from a first side of the substrate 6 to the second side of the substrate 6. The hole 61 is closed/sealed on a first side with a window 43 transparent for (at least some of) the absorption lines. The transparent part of the window 43 can extend over the complete surface of the hole 61 or over just a part of the hole 61. The window 43 can be realised as a glas, plastic, foil, sheet or plate or any other means which has the described function. The hole 61 is closed/sealed on the second side of the substrate 6 with the pressure wave sensor 41. The hole 61 in the substrate 6 closed on both sides forms thus the reference fluid chamber 42. Preferably, the hole 61 is closed/sealed with the window 43 and/or the pressure wave sensor 41 in an environment of the reference fluid such that the reference fluid chamber 42 will be filled with the reference fluid after its closure. This embodiment of the detector 4 is very easy to manufacture, reduces the necessary parts, is small and is very robust. Preferably, this embodiment of the detector 4 is used for all detectors 4 and 4' described in the embodiments filled with the respective reference fluid. However, it is also possible to use different designs of the detector 4 and/or 4'.

In the following, a method for detecting and/or analysing a particle in a fluid to be analysed will be described.

The detection space 3 must be filled with the fluid to be analysed. If the detection space 3 is open, i.e. is connected with the ambient fluid, the particle sensor is simply placed at the position, where the ambient fluid shall be analysed. The emitter 1 is then controlled to emit a light wave 2. The light wave 2 traverses then the detection space 3 with the fluid to be analysed. The particles to be analysed and/or detected in the fluid to be analysed absorb the light wave 2 at the absorption lines. The more particles to be analysed and/or detected are present in the fluid to be analysed (or the higher the concentration of the particles to be analysed and/or detected in the fluid to be analysed), the more of the light wave 2 will be absorbed at the absorption lines (or the more the intensity or amplitude of the light wave 2 at the absorption lines is reduced. The light wave 2 is further modulated. This is preferably done by controlling the intensity or amplitude of the emitter 1. However, it would also be possible to do this by a modulator on the reflector 7 or at the window 43 of the detector 4 or at any other place in the light path between the emitter 1 and the detector 4. The modulated light wave 2 which has passed/traversed the detection space 3 with the fluid to be analysed enters then (through the window 43) in the reference fluid chamber 42. The light absorbed in the reference fluid causes heat which raises the pressure. Due to the modulation of the light wave 2 entering in the reference fluid chamber 42, a pressure wave is created whose intensity or amplitude depends on the intensity or amplitude of the light wave 2 at the absorption lines and/or whose pressure wave frequency depends on the modulation frequency. The pressure wave sensor 41 senses then the pressure wave (at the modulation frequency).

A spectral line of the emission spectrum of the light wave 2 emitted by the emitter 1 is defined by its wavelength (and not by its frequency), while the modulation scheme of the emitted light wave 2 and the wave characteristics of the pressure wave(s) in the detector(s) 4 is defined by its frequency. This is to avoid any confusion between the two waves. It is however clear that the wavelength of the light wave 2 describing the emission line or emission spectrum of the light wave 2 could also be defined via the corresponding frequencies which have a fixed relationship to the wavelength over the light speed c in the respective medium. It is on the other side clear that the frequency of the pressure wave(s) could also be defined via the corresponding wavelength which has a fixed relationship to the frequency over the sound speed in the reference fluid.

The controller 5 is configured to detect or analyse the particles to be detected and/or analysed in the fluid based on the pressure wave sensed by the pressure wave sensor 41. The controller 5 can provide any analyses of the fluid to be analysed with respect to the particle to be analysed and/or detected based on the pressure wave sensed by the pressure wave sensor 41. In one example, the controller 5 detects the concentration of the particle to be detected in the fluid to be analysed. This concentration can be absolute. The absolute concentration can be a concentration density like the concentration density x %vol or %wt of the particle to be analysed and/or detected with respect to the fluid to be analysed. The absolute concentration can also be a particle concentration measured often in parts per million (ppm). The particle concentration can be obtained with the concentration density of the particle to be detected or analysed and the pressure of the fluid to be analysed. In one example, the particle sensor can have a further detection space pressure sensor which provides the actual pressure in the detection space 3. This allows to determine the particle concentration based on the pressure wave detected in the reference fluid chamber 42 and based on the pressure in the detection space 3. The concentration can also be a relative concentration, i.e. a concentration with respect to another particle or another particle mixture. The relative concentration can be determined either with two detectors 4, 4' as described later or by a relative reference value stored in the particle sensor. The controller 5 can also be configured to control the emitter 1 and/or the modulator. It is however possible that the emitter 1 and/or the modulator are controlled by themselves without the need of a controller 5. The controller 5 can have separate sub-controllers for sub-functions of the controller 5. The (complete or a part of the) controller 5 is preferably arranged on the substrate 6 which supports also the emitter 1 and the detector 4. However, it is also possible that the controller 5 is arranged somewhere else. The particle sensor could also be without a controller 5 such that the output of the particle sensor is just the signal from the pressure wave sensor. The particle sensor could thus be mounted in an electronic device (e.g. a smartphone) and the general controller (normally the CPU) of the electronic device 5 could be used as a controller 5.

Fig. 3 shows now a third embodiment of the particle sensor with two detectors 4 and 4'. The particle sensor comprises in addition to the detector 4 (subsequently also called first detector) a further detector 4' (subsequently also called second detector). The second detector 4' is designed as described above the first detector 4 with a second pressure wave sensor 41' (in the claims also called further pressure wave sensor) and a second reference fluid chamber 42' (in the claims also called further reference fluid chamber). For the details of the second detector 4', the second pressure wave sensor 41' and the second reference fluid chamber 42' it is referred to the description of the first detector 4, the first pressure wave sensor 41 and the first reference fluid chamber 42, respectively which holds analogously. Preferably, the first detector 4 and the second detector 4' are designed equally. However, it is possible to have a different design for the two detectors 4 and 4'. The first reference fluid distinguishes from the second reference fluid to detect different wavelengths in the two detectors 4 and 4'. The wavelengths absorbed in the first reference fluid are in the following called first absorption lines and the wavelengths absorbed in the second reference fluid are in the following called second absorption lines.

The particle sensor of this embodiment has preferably the same emitter 1 for irradiating both detectors 4 and 4', preferably the same LED(s). This has several advantages as described in the following. However, it would also be possible to use two different emitters 1 for irradiating the two detectors 4 and 4'.

The emitter 1 and the two detectors 4 and 4' are arranged such that the light wave 2 of the emitter 1 traverses the detection space 3 and enters then in the two detectors 4 and 4'. Preferably, the two detectors 4 and 4' are arranged in parallel such that a first portion of the light wave 2 emitted by the emitter 1 enters the first detector 4 (and not the second detector 4') and a second portion of the light wave 2 emitted by the emitter 1 enters the second detector 4' (and not the first detector 4). Such a parallel arrangement has several advantages over a series arrangement of the two detectors 4 and 4' in which the emitted light wave 2 which traversed the detection space 3 enters first one of the two detectors 4 and 4' and then the other one (after having traversed the one of the two detector). However, a series arrangement of the two detectors 4 and 4' is also possible. Preferably, the emitter 1 and the two detectors 4 and 4' are arranged such that the first portion and the second portion of the light wave 2 have the same characteristics when entering in the respective detector 4 and 4'. Preferably, the first portion of the light wave 2 has a first path length between the emitter 1 and the first detector 4 which is equal to the second path length of the second portion of the light wave 2 between the emitter 1 and the second detector 4'. Preferably, a first light path of the first portion of the light wave 2 and a second light path of the second portion of the light wave 2 are such the same amount of light is reached in the first detector 4 and in the second detector 4'. Preferably, the particle sensor comprises a light guide means which guide the first portion of the light wave 2 to the first detector 4 and the second portion of the light wave 2 to the second detector 4'. The light guide means thus provides the first and second light paths from the emitter 1 to the respective detectors 4 and 4'. The light guide means can be a reflector with two different focal points for reflecting the light wave 2 from the emitter 1 on the two detectors 4 and 4'. The light guide means might be a reflector with two ellipsoids. Obviously, it is also possible to have light guide means with three, four, five, or more ellipsoids, preferably each ellipsoid for one detector 4, 4'.

The controller 5 is connected to the two pressure wave sensors 41 and 41' such that the controller 5 can analyse or detect the particle(s) in the fluid to be analysed based on the first pressure wave (in the claims also called pressure wave) sensed by the first pressure wave sensor 41 in the first reference fluid chamber 42 and based on the second pressure wave (in the claims also called further pressure wave) detected by the second pressure wave sensor 41' in the second reference fluid chamber 42'. For example, the concentration of two particles can be determined. These concentrations can be absolute, i.e. the concentration x %vol or %wt of the two particles to be analysed and/or detected with the two reference fluid chambers 42 and 42' with respect to the fluid to be analysed, or relative, i.e. the concentration x %vol or %wt or the ratio of the two particles to be analysed and/or detected with the two reference fluid chambers 42 and 42' with respect to each other. Preferably, the ratio of the concentration of the first particle to be detected with the first detector 4 and the concentration of the second particle to be detected with the second detector 4 can be determined by the ratio of the (intensity or amplitude) of the first pressure wave and the second pressure wave.

The embodiment is described with two detectors 4 and, however, the particle sensor could equally have three or more detectors. In the following the two detector embodiment will be described.

In the two detector embodiment, (different concentrations of) different particles can be detected independently in the fluid in the detection space 3 by the particle sensor. The first reference fluid comprises a first (chemical) particle and the second reference fluid a second (chemical) particle. Thus, the gas sensor can detect the (concentration of the) first particle in the fluid in the detection space 3 based on the first pressure wave detected by the first pressure wave sensor 41 and the (concentration of the) second particle in the fluid in the detection space 3 based on the second pressure wave detected by the second pressure wave sensor 41'. So, one gas sensor can detect more than one particle. Obviously, the gas sensor can comprise three or more detectors 4 to detect three or more particle types.

In one example of the two detector embodiment, it is suggested to analyse the isotope(s) of a chemical particle in the fluid in the detection space 3. The chemical particle could be for example an atom like carbon C with the isotopes ¹²C, ¹³C and ¹⁴C or oxygen O with isotopes ¹⁶O, ¹⁷O, ¹⁸O. The chemical particle could be a molecule. A first example of a molecule would be CO with isotopes like ¹²C¹⁷O, ¹³C¹⁷O, ¹²C¹⁶O, ¹³C¹⁶O, .... Another example of a molecule would be methane CH4 with the isotopes ¹³CH4, ¹²CH4, ¹³CH3D1, ¹²CH3D1, ¹²CH2D2, ... . The first reference fluid comprises a first isotope of the chemical particle and the second reference fluid comprises a second isotope of the (same) chemical particle. Since the different isotopes of the chemical particle have (at least partially) different absorption lines, the two detectors 4 and 4' can distinguish between the two isotopes of the chemical particle. The chemical particle can be in a pure form in the reference fluid, in the form of a molecule containing the chemical particle in the first or second isotope (e.g. ¹²C or ¹³C in CO2) or in a form of a mixture of the chemical particle or molecule with another chemical particle(s) (e.g. the support liquid mentioned above). The first pressure wave detected by the first pressure sensor gives thus an indication about the first isotope of the chemical particle and the second pressure wave detected by the second pressure sensor gives thus an indication about the second isotope. The controller 5 can then analyse the two pressure waves detected in the two detectors 4 and 4' to analyse the isotope(s) of the chemical particle. There are many realisations to analyse the isotopes. In one example, the absolute concentrations of the first isotope and of the second isotope are determined. In one example, the relative concentration of the first isotope or of the isotopes of the chemical particle in the first reference fluid with respect to the second isotope or to the isotopes of the chemical particle in the second reference fluid are determined. In another example, an isotope ratio is determined based on the two pressure waves detected. The isotope ratio is a special relative concentration. This can be done by including one of the isotopes in the first reference fluid (without other isotopes of this chemical particle) and by including another one of the isotopes of the chemical particle (without other isotopes of this chemical particle) in the second reference fluid. The isotope ratio between the two isotopes can then be determined by the ratio between the (intensity or amplitude) of the two pressure waves sensed in the two detectors 4 and 4'. In another example, the first reference fluid comprises the first isotope (without further isotopes) of the chemical particle, while the second reference fluid comprises the second isotope mixed with the first isotope (and maybe other isotopes) of the (same) chemical particle (subsequently called isotope mixtures of the chemical particle). Thus, isotope ratio of the first isotope with respect to the isotope mixture of the chemical particle (or the deviation of the first isotope concentration in the fluid in the detection space 3 from the first isotope in the isotope mixture in the second reference fluid) can be determined based on the ratio of the (intensity or amplitude of the) first pressure wave and the second pressure wave. Preferably, the isotope mixture is the isotope mixture as naturally or normally observed for the chemical particle. A further advantage of the determination of an isotope ratio based on the ratio of the two pressure waves of the two detectors 4 and 4' is that this measurement is independent from eventual undesired fluctuations of the light intensity of the emitter 1 due to aging of the emitter 1 or due to dirt present in the light path. Isotope measurements in the state of the art were complex. It was also proposed to do isotope ratio measurements with photoacoustic detectors as disclosed for example in WO97/47957. However, the proposed detectors were complex and difficult to control. The analysis of isotopes of a chemical particle described in here compared to the state of the art is revolutionary simple and would reduce the complexity of current isotope detectors significantly.

A problem of the described particle sensor is the sensitivity of the particle sensor. Long light paths of the light wave 2 through the detection space 3 allow a high sensitivity for low particle concentrations but are not able to detect high particle concentrations as all the light wave 2 is absorbed in the long light path before entering in the detector 4. Short light paths of the light wave 2 through the detection space 3 have a low sensitivity for low particle concentrations but allow to distinguish higher particle concentration.

In one example of the two detector embodiment, different light path lengths of two detectors allow to increase the sensitivity of the particle sensor. In this example, the reference fluid comprises the particle to be detected or another particle which has similar absorption characteristics for the light wave 2 as the particle to be detected and the further reference fluid comprises the particle to be detected or the other particle which has similar absorption characteristics for the light wave 2 as the particle to be detected, wherein the light path of the light wave 2 through the detection space 3 to the reference fluid chamber 42 is longer than the light path of the light wave 2 through the detection space 3 to the further reference fluid chamber 42', wherein the controller 5 is configured to detect the particle to be detected with a first sensitivity based on the pressure or temperature sensed in the reference sensor 41 and to detect the particle to be detected with a second sensitivity based on the pressure or temperature sensed in the further reference sensor 41', wherein the first sensitivity is higher than the second sensitivity

As mentioned above, the light intensity of the light wave 2 emitted by the emitter 1 can fluctuate to several reasons. For example, aging of the emitter 1 can cause an intensity drop. Also the temperature can influence the intensity of the emitter 1. Dirt or other light reducing characteristics in the light path between the emitter 1 and the detector 4 can influence the light intensity of the light wave 2 (without considering the desired absorption of the light wave 2 in the fluid to be analysed). In relative concentration measurements of a gas or particle in the fluid in the detection space 3, the fluctuations in the light intensity are cancelled out and do not influence the measurement. For absolute concentration measurements of a particle or gas in the fluid to be analysed, the undesired light intensity fluctuations can cause a significant measurement error.

Therefore, in one example of the two detector embodiment it is suggested to use the second detector 4' to determine the light intensity to determine concentration of the particle to be analysed in the fluid in the detection space 3 without the influence of the light fluctuations. Therefore, the first reference fluid is chosen as described above in the first exemplary embodiment (with only one detector 4) depending on the particle to be analysed. The second reference fluid is chosen such to comprise only particles which do not naturally be present in the fluid to be analysed (or are not expected to be present in there) or to have (just) absorption lines in the emission spectrum of the light wave 2 which are not present or expected in the fluid to be analysed. Thus, the pressure wave sensed in the second detector 4' is thus not influenced by the fluid in the detection space 3 and/or is thus related or (direct) proportional to the light intensity of the emitter 1. By normalizing the first pressure wave based on the second pressure wave, the normalized first pressure wave becomes independent of the light intensity fluctuations and provides thus a much better detection result for detecting the particle to be detected. The parallel arrangement of the two detectors 4 and 4' is particularly advantageous for this embodiment, because this guarantees that the same light amount arrives in each detector 4 and 4' such that the normalization of the measurement with respect to the light intensity has a lower error. The series arrangement of the two detectors 4 and 4' could lead to an influence of the light intensity in the subsequent detector and falsify also the normalized detection result.

An alternative solution for the light intensity fluctuations is, according to a preferred embodiment, that the two detectors are preferably arranged in parallel. The particle sensor is arranged such that the first portion of the light wave 2 emitted by the emitter 1 traverses the detection space and enters then the first detector 4 (and not the second detector 4') and the second portion of the light wave 2 emitted by the emitter 1 enters the second detector 4' (and not the first detector 4) without traversing the detection space or with traversing the detection space with a different path length before entering the second detector 4'. The further reference fluid can comprise any particles which absorb in the emission spectrum of the emitter 1. The further reference fluid can comprise for example also the same fluid as in the reference fluid or could comprises the particle to be detected or another particle which has similar absorption characteristics for the electromagnetic wave as the particle to be detected. In the case, where the light path of the second portion of the light wave 2 through the detection space 3 is shorter than of the first portion, the third and fifth embodiment of the two detector embodiment can be combined and/or the controller 5 could determine the concentration of the particle to be detected independent from the light fluctuations of the emitter and with an increased sensitivity based on the pressure or temperature and based on the further pressure or temperature. The light path of the second portion of the light wave 2 through the detection space 3 can be made shorter (up to zero) by various measures which can also be combined. The light path means could provide for the first portion a longer light path through the detection space 3 than for the first portion. The position of the further detector 4' can be arranged closer to the emitter 1 than the detector 4. A part or the complete light path of the second portion could be realised in a stable medium, e.g. glass, or another chamber with a stable fluid concentration. The second portion could also be inserted directly in the further fluid chamber 42 without passing the detection space 3.

In a fourth exemplary embodiment shown in Fig. 4, the problem of the light intensity fluctuations described above is solved with only one detector 4. This embodiment comprises two modulators, a first modulator (corresponding to the modulator described above) and a second modulator 71 (also called in the claims as further modulator). The first modulator modulates the light wave 2 to obtain a first modulated light wave 2 modulated with a with a first modulation scheme. The second modulator 71 modulates the light wave 2, preferably the first modulated light wave 2 to obtain a second modulated light wave 2' modulated with a with a second modulation scheme. The first modulation scheme and the second modulation scheme are distinguishable, i.e. they are such that the first and second modulated light waves 2 and 2' create pressure waves in the detector 4 (and/or in the reference fluid chamber 42) which can be distinguished. Preferably, the first modulation scheme and the second modulation scheme have different modulation frequencies, i.e. the first modulated light wave 2 has a first modulation frequency and the second modulated light wave 2' has a second modulation frequency.

The emitter 1, the first modulator, the second modulator and the detector 4 are arranged such that the first light wave 2 enters the reference fluid chamber 42 without passing the detection space 3 and causes in the reference fluid chamber 42 a first pressure wave according to the first modulation scheme, and such that the second light wave 2' enters the reference fluid chamber 42 after having traversed the detection space 3 and causes in the reference fluid chamber 42 a second pressure wave according to the second modulation scheme. The first modulator is preferably realized in the control of the emitter 1 as described above. However, another modulation means can also be used as the first modulator. The first modulated light wave 2 enters the reference fluid chamber 42 (without passing the detection space 3) and causes a first pressure wave in the reference fluid according to the first modulation scheme. Since the first modulated light wave 2 has not traversed the detection space 3, it is not influenced by the fluid to be analysed and/or the first pressure wave is proportional to or depends from the light intensity or amplitude of the light wave 2 emitted from the emitter 1. Preferably, the second modulator is configured or arranged to modulate the first modulated light wave 2 to obtain the second modulated wave 2', i.e. the first modulator and the second modulator are arranged in series. However, it would be also possible to arrange the two modulators in parallel such that a first portion of the light wave emitted from the emitter 1 is modulated by the first modulator to obtain the first modulated light wave which is directly inserted in the reference fluid chamber without passing the detection space 3, and such that a second portion (different form the first portion) of the light wave emitted from the emitter 1 is modulated by the second modulator 71 to obtain the second modulated light wave which passes the detection space 3 before entering the reference fluid chamber 42. Preferably, the emitter 1, the first modulator, the second modulator 71 and the detector 4 are arranged such that the first modulated light wave 2 passes first the reference fluid chamber 42 and (at least a part of it) exits then the reference fluid chamber 42 to pass through the detection space 3 back into the reference fluid chamber 42, wherein the second modulator is arranged such that the first modulated light wave 2 is modulated by the second modulator 71 between leaving the reference fluid chamber 42 and returning into the reference fluid chamber 42 such to change the modulation scheme of the first light wave 2 and to create the second modulated light wave 2' before the first modulated light wave 2 returns back into the reference fluid chamber. Preferably, a light guide means is used to guide the first modulated light wave 2 (before or after the modulation by the second modulator to create the second modulated light wave 2') as second modulated light wave 2' back into the reference fluid chamber 42. Preferably, the light guide means is a reflector 7 as shown in Fig. 4. The light guide means or the reflector 7 can have focal means to focus the light back into the reference fluid chamber 42. The second modulator 71 is preferably arranged on the reflector 7, e.g. by a vibration means which makes the reflector 7 vibrate at a second modulation frequency (or according to the second modulation scheme), or by a coating whose reflectivity can be controlled at the second modulation frequency or according to the second modulation scheme. However, the second modulator need not to be arranged on the reflector 7 and can be realised somewhere else. It is also possible to realise this embodiment without light guide means or with different light guide means, e.g. when the reference fluid chamber 42 is formed with two opposed windows with the detection space 3 in between such that the first modulated light wave 2 can exit the reference fluid chamber 42 through the first window, pass the detection space and re-enter the reference fluid 42 through the second window. In this case, no reflector 7 is needed. A focal means could be provided as light guide means between the two windows to focus the light wave 2 or 2' on the window through which the second modulated light wave 2' re-enters the reference fluid chamber 42. This focal means is however not necessary. In this case with the two windows, the second modulator could be provided on one of the two windows or on the light guide means, e.g. as a coating which can be electronically controlled according to the second modulation scheme. Many more realisations are possible. Preferably, the emitter 1 (with the first modulator) is arranged in the reference fluid chamber 42. The second modulated light wave 2' has passed the detection space 3 such that the intensity or amplitude of the second light wave 2 at the absorption lines depends on the concentration of the particles in the fluid to be analysed. The second modulated light wave 2' causes a second pressure wave according to the second modulations scheme whose intensity or amplitude is proportional to the intensity or amplitude of the second light wave 2 at the absorption lines and thus to the concentration of the particles in the fluid to be analysed. Since the first pressure wave and the second pressure wave in the reference fluid have different modulation schemes or different modulation frequencies, they are distinguishable and can be detected by the same pressure wave sensor 41 in the reference fluid chamber 42.

The controller 5 for detecting and/or analysing the particles in the fluid to be analysed is configured to detect and/or analyse the particle independently from intensity fluctuations of the emitted light wave 2 based on the first pressure wave sensed in the reference fluid chamber 42 and on the second pressure wave sensed in the reference fluid chamber 42, preferably based on the ratio of the first pressure wave and the second pressure wave. This reduces further the complexity of the particle sensor, and can also normalize out light fluctuations caused by the emitter 1. However, since the first modulated light wave 2 detected in the pressure wave detector 41 has a different light path than the second modulated light wave 2, this solution cannot detect a light intensity variation due to dirt in the detection space 3.

Fig. 5 describes a fifth exemplary embodiment. This exemplary embodiment allows to detect a first article to be detected and a second particle to be detected. It comprises a first emitter 1 (also called in the claims an emitter), a second emitter 2'(also called in the claims a further emitter), a first modulator (also called in the claims a modulator) and a second modulator (also called in the claims further modulator). The first emitter 1 emits a first light wave 2 (also called electromagnetic wave in the claims) with a first emission spectrum, wherein the further emitter 1' emits a further light wave 2' (also called further electromagnetic wave in the claims) with a second emission spectrum different from the first emission spectrum. The first modulator (also called modulator in the claims) is configured to modulate the first light wave 2 with a first modulation scheme. The second modulator (also called further modulator in the claims) is configured to modulate the second light wave 2' with a second modulation scheme. The reference fluid comprises the particle to be detected or another particle which has similar absorption characteristics for the first light wave 2 as the first particle to be detected. The reference fluid comprises a second or further particle to be detected or another particle which has similar absorption characteristics for the electromagnetic wave 2 as the further particle to be detected. The controller 5 is configured to detect the first particle to be detected based on the pressure or temperature wave according to the first modulation scheme and to detect the second particle to be detected based on the pressure or temperature wave according to the second modulation scheme. The first emitter 1 and the second emitter 1' are preferably realised by two different light sources, e.g. two LEDs with different emission spectra. This has the advantage that both modulators can be realised in the intensity control of the two emitters 1 and 1' for modulating the two light waves 2. However, it is also possible to realise the two emitters 1 and 1' by a common emission source and some two filters for filtering the two light waves 2 and 2' with different emission spectra. In this case, the filters could also be used as modulators, e.g. with controllable transmission or reflection coefficients. An example for the fifth embodiment is to detect CO2 and CH4 in the particle sensor. In this case, the reference fluid is filled with CO2 and CH4. A first emitter 1, e.g. an LED, is used with an emission spectrum of the absorption band of CO2 and a second emitter 1' is used with the second emission spectrum at the absorption band of CH4. The first light wave is modulated at 300 Hz and the second light wave 2' is modulated at 400 Hz. The pressure wave at 300 Hz will contain information about the CO2 concentration while the pressure wave at 400 Hz will contain information about the CH4 concentration.

Fig. 6 describes a sixth preferred embodiment wherein the reference chamber 42 comprises preferably a first reference fluid with a first absorption spectrum and a second reference fluid with a second absorption spectrum (at least partially different from the first absorption spectrum). The particle sensor comprises in addition to the elements of the exemplary embodiment of Fig. 1, a frequency spectrum controller 8 which allows to control the frequency spectrum of the electromagnetic wave 2 entered into the reference chamber 42. The frequency spectrum controller 8 is preferably arranged between the emitter 1 and the reference chamber 42. Preferably, the frequency spectrum controller 8 is arranged on the substrate above the emitter 1 or above the reference chamber 42. The frequency spectrum controller 8 allows to control the electromagnetic wave first to be at a first frequency (spectrum) corresponding to first absorption spectrum (and not to the second absorption spectrum) to measure at the reference sensor 41 a first signal and to control the electromagnetic wave afterwards to be at a second frequency (spectrum) corresponding to second absorption spectrum (and not to the first absorption spectrum) to measure at the reference sensor 41 a second signal. The controller 5 can then detect a particle based on the first signal and the second signal. The frequency spectrum controller 8 is preferably configured to select between a plurality of small frequency spectra, wherein the reference sensor 41 measures the pressure wave in the reference chamber 42 for each of the plurality of small frequency spectra. Preferably, the frequency spectrum controller 8 is a Fabry Perot interferometer, preferably a MEMS Fabry Perot interferometer. Preferably, the first frequency (spectrum) is chosen such that it corresponds to frequency (spectrum) which is absorbed by the first reference fluid, but not by the second reference fluid. Preferably, the second frequency (spectrum) is chosen such that it corresponds to frequency (spectrum) which is absorbed by the second reference fluid, but not by the first reference fluid. If the first and second absorption spectrum have an overlap frequency, the overlap frequency can be neglected in the controller 5 such that the measurement result is improved. The first reference fluid is chosen depending on the particle to be analysed. The second reference fluid is chosen such to comprise only particles which do not naturally be present in the fluid to be analysed (or are not expected to be present in there) or to have (just) absorption lines in the emission spectrum of the light wave 2 which are not present or expected in the fluid to be analysed. Thus, the pressure wave sensed in the second frequency (spectrum) is thus not influenced by the fluid in the detection space 3 and/or is thus related or (direct) proportional to the light intensity of the emitter 1. By normalizing the first pressure wave based on the second pressure wave, the normalized first pressure wave becomes independent of the light intensity fluctuations and provides thus a much better detection result for detecting the particle to be detected. This can be used to detect two particle types present in the fluid to be measured, e.g. the first reference fluid could be CH4 and the second reference fluid could be CO2. In one example, the emitter 1 is a LED. For example, the first reference fluid could contain CO2 for detecting the CO2 concentration based on the first pressure wave. The second reference fluid could contain SF6 which does not naturally appear in the gas to be analysed (thus ambient air). Since SF6 has also absorption lines in the emission spectrum of LEDs which are normally used for CO2 detection, a reference channel could be implemented with one LED 1, one detector 4 by simply adding a frequency spectrum controller 8. In another example, the emitter 1 is a thermic emitter which emits a black body or grey body radiation. This results in a large emission spectrum of the emitter 1 so that the combination of the emitter 1 and the frequency spectrum controller 8 can obtain multiple (at least two) "small band" emission spectra over a large frequency spectrum so that with the same emitter 1 and the same detector 4 particles with different absorption spectra in different frequencies can be detected. The number of particles detected with the same detector 4 can be almost arbitrarily be increased by simply increasing the number of reference fluids in the reference chamber 42. For example, the reference chamber 42 could have a third reference fluid with third absorption spectrum (at least partly being different from the first and second absorption spectrum). The first and the third reference fluid could refer to a first and a second particle to be detected, while the second reference fluid refers to a fluid not naturally expected in the fluid to be analysed. The frequency spectrum controller 8 allows to control the electromagnetic wave in different times to be at a first frequency (spectrum) corresponding to first absorption spectrum (and not to the second or third absorption spectrum) to measure at the reference sensor 41 a first signal, to control the electromagnetic wave to be at a second frequency (spectrum) corresponding to second absorption spectrum (and not to the first or third absorption spectrum) to measure at the reference sensor 41 a second signal and to control the electromagnetic wave to be at a third frequency (spectrum) corresponding to third absorption spectrum (and not to the first or second absorption spectrum) to measure at the reference sensor 41 a third signal. The controller 5 can then detect the first particle corrected by wave intensity fluctuations based on the first signal and the second signal and detect the second particle corrected by wave intensity fluctuations based on the third signal and the second signal.

The emitter 1 of the sixth embodiment could be arranged such that the electromagnetic wave 2 controlled by the frequency spectrum controller 8 passes the reference chamber 42 with the first modulation scheme before having passed the detection space 3 and enters the reference chamber 42 with a second modulation scheme after having passed the detection space 3. The frequency spectrum controller 8 could be also arranged such to control the frequency of the the electromagnetic wave 2 after having passed the reference chamber 42 with the first modulation scheme before having passed the detection space 3 and/or before having entered the reference chamber 42 with a second modulation scheme after having passed the detection space 3. This has the advantage that in addition to the light fluctuations caused by aging, also light fluctuations by dirt can be detected and corrected.

The light absorbed in the reference fluid causes an increase in the temperature which causes an increase in the pressure. Thus, the reference sensor in the reference chamber 42 can be instead of a pressure wave sensor 41 also a temperature wave sensor to detect a temperature wave in the reference fluid in the reference chamber 42. In the invention, the emitted light wave 2 is modulated by the modulator such that a pressure or temperature wave is detected in the reference chamber 42 by the reference sensor. However, it is also possible to use no modulator and to measure the temperature or pressure in the reference fluid directly. Thus, the reference sensor can be a pressure sensor or a temperature sensor. The pressure sensor can be a pressure wave sensor, if a modulator is used. The temperature sensor can be a temperature wave sensor, if a modulator is used. Since the temperature can be measured with a very high preciseness, the use of a temperature sensor can be very advantageous. In addition, the temperature sensor has often no moving parts and is thus not disturbed by mechanical impacts of the particle sensor. Thus, such a detector could also be used on a vehicle without being disturbed by the vibrations and other mechanical impulses common on a vehicle.

The invention shall not be limited to the described embodiments, but modifications and variations will be apparent to a skilled person within the scope of the appended claims.

## Claims

1. Particle sensor for detecting or analysing particles in a fluid, the particle sensor comprising:
an emitter (1) for emitting an electromagnetic wave (2),
a modulator for modulating the electromagnetic wave (2),
a detection space (3) for containing the fluid;
a detector (4) comprising a reference fluid chamber (42) and a reference pressure or temperature sensor (41), wherein the reference fluid chamber (42) contains a reference fluid, and wherein the reference pressure or temperature sensor (41) is arranged to sense a pressure or temperature wave of the reference fluid in the reference fluid chamber (42),
a further detector (4') comprising a further reference fluid chamber (42') and a further reference pressure or temperature sensor (41'), wherein the further reference fluid chamber (42') contains a further reference fluid (42'), wherein the further reference pressure or temperature sensor (41') is arranged to sense a further pressure or temperature wave of the further reference fluid in the further reference fluid chamber (42'), and
a controller (5) for detecting or analysing a chemical particle in the fluid based on the pressure or temperature wave sensed in the reference fluid chamber (42), wherein the controller (5) is configured to correct the measurement of the particles in the fluid from an influence of intensity fluctuations of the electromagnetic wave (2) based on the pressure or temperature wave sensed in the reference fluid chamber (42) and on the further pressure or temperature wave sensed in the further reference fluid chamber (42')
wherein the emitter (1) and the detector (4) are arranged such that the emitted electromagnetic wave (2) traverses the detection space, (3) and such that at least a part of the electromagnetic wave (2) which traversed the detection space (3) enters the reference fluid chamber (42),
wherein the emitter (1) and the further detector (4) are arranged such that the electromagnetic wave (2) traverses the detection space (3), and such that at least a part of the electromagnetic wave (2) which traversed the detection space (3) enters the further reference fluid chamber (42'),
wherein the reference fluid in the reference fluid chamber (42) comprises the chemical particle to be detected or comprises another chemical particle which has similar absorption characteristics for the electromagnetic wave (2) as the chemical particle to be detected,
**characterized in that**
the further reference fluid in the further reference fluid chamber (42') comprises a further chemical particle which does not appear in the fluid or which absorbs frequencies of the electromagnetic wave (2) which are not absorbed in the fluid.

2. Particle sensor according to claim 1, wherein the detector (4) and the further detector (4') are arranged in parallel such that a first portion of the electromagnetic wave (2) which traversed the detection space (3) enters the reference fluid chamber (42) and a second portion of the electromagnetic wave (2) which traversed the detection space (3) and is different from the first portion enters the further reference fluid chamber (42').

3. Particle sensor according to claim 2, wherein the first portion of the electromagnetic wave (2) has a first path length between the emitter (1) and the detector (4) which is equal to a second path length of the second portion of the electromagnetic wave (2) between the emitter (1) and the further detector (4').

4. Particle sensor according to claim 2, wherein the particle sensor is arranged such that the first portion of the electromagnetic wave (2) emitted by the emitter (1) traverses the detection space (3) and enters then the detector (4), and the second portion of the electromagnetic wave (2) emitted by the emitter (1) enters the further detector (4') traversing the detection space (3) with a different path length before entering the further detector (4').

5. Particle sensor for detecting or analysing particles in a fluid , the particle sensor comprising:
an emitter (1) for emitting an electromagnetic wave (2),
a modulator for modulating the electromagnetic wave (2) a detection space (3) for containing the liquid to be analysed;
a detector (4) comprising a reference fluid chamber (42) and a reference pressure or temperature sensor (41), wherein the reference fluid chamber (42) contains a reference fluid, and wherein the reference pressure or temperature sensor (41) is arranged to sense a pressure or temperature wave of the reference fluid in the reference fluid chamber (42),
a further detector (4') comprising a further reference fluid chamber (42') and a further reference pressure or temperature sensor (41'), wherein the further reference fluid chamber (42') contains a further reference fluid (42'), and wherein the further reference pressure or temperature sensor (41') is arranged to sense a further pressure or temperature wave of the further reference fluid in the further reference fluid chamber (42'), and
a controller (5) for detecting or analysing a chemical particle in the fluid based on the pressure or temperature wave sensed in the reference fluid chamber (42), wherein the controller (5) is configured to correct the measurement of the particles in the fluid from an influence of intensity fluctuations of the electromagnetic wave based on the pressure or temperature wave sensed in the reference fluid chamber (42) and on the further pressure or temperature wave sensed in the further reference fluid chamber (42'),
wherein the emitter (1) and the detector (4) are arranged such that the emitted electromagnetic wave (2) traverses the detection space (3) and such that at least a part of the electromagnetic wave (2) which traversed the detection space (3) enters the reference fluid chamber (42),
wherein the reference fluid in the reference fluid chamber (42) comprises the chemical particle to be detected or comprises another chemical particle which has similar absorption characteristics for the electromagnetic wave (2) as the chemical particle to be detected,
**characterized in that**
the emitter (1) and the further detector (4') are arranged such that the electromagnetic wave (2) enters the further reference fluid chamber (42') without traversing the detection space (3).

6. Particle sensor according to claim 5, wherein the detector (4) and the further detector (4') are arranged in parallel such that a first portion of the electromagnetic wave (2) which traversed the detection space (3) enters the reference fluid chamber (42) and a second portion of the electromagnetic wave (2) which traversed the detection space (3) and is different from the first portion enters the further reference fluid chamber (42'), wherein the second portion is inserted directly in the further fluid chamber (42') without passing the detection space (3).

7. Particle sensor according to one of claims 1 to 6, wherein the controller for detecting the particles in the fluid is configured to detect the chemical particle independently from intensity fluctuations of the electromagnetic wave based on the ratio of the pressure or temperature wave and the further pressure or temperature wave.

8. Particle sensor for detecting or analysing particles in a fluid , the particle sensor comprising:
an emitter (1) for emitting an electromagnetic wave (2),
a detection space (3) for containing the liquid to be analysed;
a detector (4) comprising a reference fluid chamber (42) and a reference pressure or temperature sensor (41), wherein the reference fluid chamber (42) contains a reference fluid, wherein the reference pressure or temperature sensor (41) is arranged to sense a pressure or temperature wave of the reference fluid in the reference fluid chamber (42),
a controller (5) for detecting or analysing a chemical particle in the fluid based on the pressure or temperature wave sensed in the reference fluid chamber (42), and
a modulator for modulating the emitted electromagnetic wave (2) to obtain a first modulated electromagnetic wave (2) with a first modulation scheme,
wherein the emitter (1) and the detector (4) are arranged such that the emitted electromagnetic wave (2) traverses the detection space, (3) and such that at least a part of the electromagnetic wave (2) which traversed the detection space (3) enters the reference fluid chamber (42),
**characterized in**
a further modulator (71) for modulating the emitted electromagnetic wave to obtain a second modulated electromagnetic wave (2') with a second modulation scheme,
wherein the emitter (1), the modulator, the further modulator (71) and the detector (4) are arranged
such that the first modulated electromagnetic wave (2) enters the reference fluid chamber (42) without having passed the detection space (3) before and causes in the reference fluid chamber (42) a first pressure or temperature wave according to the first modulation scheme, and
such that the second modulated electromagnetic wave (2') enters the reference fluid chamber (42) after having traversed the detection space (3) and causes in the reference fluid chamber (42) a second pressure or temperature wave according to the second modulation scheme,
wherein the controller (5) is configured correct the measurement of the particles in the fluid from an influence of intensity fluctuations of the emitted electromagnetic wave based on the first pressure or temperature wave sensed in the reference fluid chamber (42) and on the second pressure or temperature wave sensed in the reference fluid chamber (42).

9. Particle sensor according to claim 8, wherein the emitter (1), the modulator, the further modulator (71) and the detector (4) are arranged such that the first modulated electromagnetic wave (2) exits the reference fluid chamber (42) and returns as the second modulated electromagnetic wave (2) back into the reference fluid chamber (42), wherein the further modulator (71) is configured to modulate the first modulated electromagnetic wave (2) after the first modulated electromagnetic wave (2) has left the reference fluid chamber (42) and before the first or second modulated electromagnetic wave (2, 2') returns into the reference fluid chamber (42) to obtain the second modulated electromagnetic wave (2'), wherein the first and/or second modulated electromagnetic wave (2, 2') traverses the detection space (3).

10. Particle sensor according to claim 9, wherein the emitter (1) is arranged in the reference fluid chamber (41), wherein a reflector (7) reflects the first or second modulated light wave (2) back into the reference fluid chamber (42).

11. Particle sensor according to one of claims 1 to 10 comprising a substrate (6), wherein the substrate (6) comprises a hole (61) sealed on a second side of the substrate (6) by the reference pressure or temperature sensor (41) and on a first side of the substrate (6) by a window transparent for at least some frequencies of the electromagnetic wave (2) which traversed the detection space (3), wherein the hole (61) sealed on both sides of the substrate (6) forms the reference fluid chamber (42) filled with the reference fluid.

12. Particle sensor according to one of claims 1 to 11, wherein the reference pressure or temperature sensor (41) is a temperature sensor.

13. Particle sensor according to one of claims 1 to 11, wherein the reference pressure or temperature sensor (41) is a pressure sensor.

## Patentansprüche

1. Teilchensensor zum Erfassen oder Analysieren von Teilchen in einem Fluid, wobei der Teilchensensor umfasst:
einen Emitter (1) zum Emittieren einer elektromagnetischen Welle (2),
einen Modulator zum Modulieren der elektromagnetischen Welle (2),
einen Erfassungsraum (3) zum Enthalten des Fluids;
einen Detektor (4), der eine Referenzfluidkammer (42) und einen Referenzdruckoder -temperatursensor (41) umfasst, wobei die Referenzfluidkammer (42) ein Referenzfluid enthält, und wobei der Referenzdruck- oder -temperatursensor (41) eingerichtet ist, um eine Druck- oder Temperaturwelle des Referenzfluids in der Referenzfluidkammer (42) zu erfassen,
einen weiteren Detektor (4'), der eine weitere Referenzfluidkammer (42') und einen weiteren Referenzdruck- oder -temperatursensor (41') umfasst, wobei die weitere Referenzfluidkammer (42') ein weiteres Referenzfluid (42') enthält, wobei der weitere Referenzdruck- oder -temperatursensor (41) eingerichtet ist, um eine weitere Druck- oder Temperaturwelle des weiteren Referenzfluids in der weiteren Referenzfluidkammer (42') zu erfassen, und
eine Steuereinheit (5) zum Erfassen oder Analysieren eines chemischen Teilchens im Fluid auf Grundlage der in der Referenzfluidkammer (42) erfassten Druck- oder Temperaturwelle, wobei die Steuereinheit (5) konfiguriert ist, um die Messung der Teilchen im Fluid von einem Einfluss von Intensitätsfluktuationen der elektromagnetischen Welle (2) auf Grundlage der in der Referenzfluidkammer (42) erfassten Druck- oder Temperaturwelle und der in der weiteren Referenzfluidkammer (42') erfassten weiteren Druck- oder Temperaturwelle zu korrigieren
wobei der Emitter (1) und der Detektor (4) derart eingerichtet sind, dass die emittierte elektromagnetische Welle (2) den Erfassungsraum (3) durchquert, und derart, dass mindestens ein Teil der elektromagnetischen Welle (2), der den Erfassungsraum (3) durchquert hat, in die Referenzfluidkammer (42) eintritt,
wobei der Emitter (1) und der weitere Detektor (4) derart eingerichtet sind, dass die elektromagnetische Welle (2) den Erfassungsraum (3) durchquert, und derart, dass mindestens ein Teil der elektromagnetischen Welle (2), der den Erfassungsraum (3) durchquert hat, in die weitere Referenzfluidkammer (42') eintritt,
wobei das Referenzfluid in der Referenzfluidkammer (42) das zu erfassende chemische Teilchen oder ein anderes chemisches Teilchen umfasst, das ähnliche Absorptionseigenschaften für die elektromagnetische Welle (2) wie das zu erfassende chemische Teilchen aufweist,
**dadurch gekennzeichnet, dass**
das weitere Referenzfluid in der weiteren Referenzfluidkammer (42') ein weiteres chemisches Teilchen umfasst, das nicht im Fluid vorkommt oder das Frequenzen der elektromagnetischen Welle (2) absorbiert, die nicht im Fluid absorbiert werden.

2. Teilchensensor nach Anspruch 1, wobei der Detektor (4) und der weitere Detektor (4') derart parallel eingerichtet sind, dass ein erster Abschnitt der elektromagnetischen Welle (2), der den Erfassungsraum (3) durchquert hat, in die Referenzfluidkammer (42) eintritt, und ein zweiter Abschnitt der elektromagnetischen Welle (2), der den Erfassungsraum (3) durchquert hat und sich vom ersten Abschnitt unterscheidet, in die weitere Referenzfluidkammer (42') eintritt.

3. Teilchensensor nach Anspruch 2, wobei der erste Abschnitt der elektromagnetischen Welle (2) eine erste Pfadlänge zwischen dem Emitter (1) und dem Detektor (4) aufweist, die gleich einer zweiten Pfadlänge des zweiten Abschnitts der elektromagnetischen Welle (2) zwischen dem Emitter (1) und dem weiteren Detektor (4') ist.

4. Teilchensensor nach Anspruch 2, wobei der Teilchensensor derart eingerichtet ist, dass der erste Abschnitt der elektromagnetischen Welle (2), die vom Emitter (1) emittiert wird, den Erfassungsraum (3) durchquert und dann in den Detektor (4) eintritt, und der zweite Abschnitt der elektromagnetischen Welle (2), die vom Emitter (1) emittiert wird, in den weiteren Detektor (4') eintritt und den Erfassungsraum (3) mit einer unterschiedlichen Pfadlänge durchquert, bevor er in den weiteren Detektor (4') eintritt.

5. Teilchensensor zum Erfassen oder Analysieren von Teilchen in einem Fluid, wobei der Teilchensensor umfasst:
einen Emitter (1) zum Emittieren einer elektromagnetischen Welle (2),
einen Modulator zum Modulieren der elektromagnetischen Welle (2)
einen Erfassungsraum (3) zum Enthalten des zu analysierenden Fluids;
einen Detektor (4), der eine Referenzfluidkammer (42) und einen Referenzdruck- oder -temperatursensor (41) umfasst, wobei die Referenzfluidkammer (42) ein Referenzfluid enthält, und wobei der Referenzdruck- oder -temperatursensor (41) eingerichtet ist, um eine Druck- oder Temperaturwelle des Referenzfluids in der Referenzfluidkammer (42) zu erfassen,
einen weiteren Detektor (4'), der eine weitere Referenzfluidkammer (42') und einen weiteren Referenzdruck- oder -temperatursensor (41') umfasst, wobei die weitere Referenzfluidkammer (42') ein weiteres Referenzfluid (42') enthält, und wobei der weitere Referenzdruck- oder -temperatursensor (41) eingerichtet ist, um eine weitere Druck- oder Temperaturwelle des weiteren Referenzfluids in der weiteren Referenzfluidkammer (42') zu erfassen, und
eine Steuereinheit (5) zum Erfassen oder Analysieren eines chemischen Teilchens im Fluid auf Grundlage der in der Referenzfluidkammer (42) erfassten Druck- oder Temperaturwelle, wobei die Steuereinheit (5) konfiguriert ist, um die Messung der Teilchen im Fluid von einem Einfluss von Intensitätsfluktuationen der elektromagnetischen Welle auf Grundlage der in der Referenzfluidkammer (42) erfassten Druck- oder Temperaturwelle und der in der weiteren Referenzfluidkammer (42') erfassten weiteren Druck- oder Temperaturwelle zu korrigieren,
wobei der Emitter (1) und der Detektor (4) derart eingerichtet sind, dass die emittierte elektromagnetische Welle (2) den Erfassungsraum (3) durchquert, und derart, dass mindestens ein Teil der elektromagnetischen Welle (2), der den Erfassungsraum (3) durchquert hat, in die Referenzfluidkammer (42) eintritt,
wobei das Referenzfluid in der Referenzfluidkammer (42) das zu erfassende chemische Teilchen oder ein anderes chemisches Teilchen umfasst, das ähnliche Absorptionseigenschaften für die elektromagnetische Welle (2) wie das zu erfassende chemische Teilchen aufweist,
**dadurch gekennzeichnet, dass**
der Emitter (1) und der weitere Detektor (4') derart eingerichtet sind, dass die elektromagnetische Welle (2) in die weitere Referenzfluidkammer (42') eintritt, ohne den Erfassungsraum (3) zu durchqueren.

6. Teilchensensor nach Anspruch 5, wobei der Detektor (4) und der weitere Detektor (4') derart parallel eingerichtet sind, dass ein erster Abschnitt der elektromagnetischen Welle (2), der den Erfassungsraum (3) durchquert hat, in die Referenzfluidkammer (42) eintritt, und ein zweiter Abschnitt der elektromagnetischen Welle (2), der den Erfassungsraum (3) durchquert hat und sich vom ersten Abschnitt unterscheidet, in die weitere Referenzfluidkammer (42') eintritt, wobei der zweite Abschnitt direkt in die weitere Fluidkammer (42') eingesetzt wird, ohne den Erfassungsraum (3) zu durchqueren.

7. Teilchensensor nach einem der Ansprüche 1 bis 6, wobei die Steuereinheit zum Erfassen der Teilchen im Fluid konfiguriert ist, um das chemische Teilchen unabhängig von Intensitätsfluktuationen der elektromagnetischen Welle auf Grundlage des Verhältnisses der Druck- oder Temperaturwelle und der weiteren Druck- oder Temperaturwelle zu erfassen.

8. Teilchensensor zum Erfassen oder Analysieren von Teilchen in einem Fluid, wobei der Teilchensensor umfasst:
einen Emitter (1) zum Emittieren einer elektromagnetischen Welle (2),
einen Erfassungsraum (3) zum Enthalten des zu analysierenden Fluids;
einen Detektor (4), umfassend eine Referenzfluidkammer (42) und einen Referenzdruck- oder -temperatursensor (41), wobei die Referenzfluidkammer (42) ein Referenzfluid enthält, wobei der Referenzdruck- oder -temperatursensor (41) eingerichtet ist, um eine Druck- oder Temperaturwelle des Referenzfluids in der Referenzfluidkammer (42) zu erfassen,
eine Steuereinheit (5) zum Erfassen oder Analysieren eines chemischen Teilchens im Fluid auf Grundlage der in der Referenzfluidkammer (42) erfassten Druck- oder Temperaturwelle, und
einen Modulator zum Modulieren der emittierten elektromagnetischen Welle (2) zum Erhalten einer ersten modulierten elektromagnetischen Welle (2) mit einem ersten Modulationsschema,
wobei der Emitter (1) und der Detektor (4) derart eingerichtet sind, dass die emittierte elektromagnetische Welle (2) den Erfassungsraum (3) durchquert, und derart, dass mindestens ein Teil der elektromagnetischen Welle (2), der den Erfassungsraum (3) durchquert hat, in die Referenzfluidkammer (42) eintritt,
**gekennzeichnet durch**
einen weiteren Modulator (71) zum Modulieren der emittierten elektromagnetischen Welle, zum Erhalten einer zweiten modulierten elektromagnetischen Welle (2') mit einem zweiten Modulationsschema,
wobei der Emitter (1), der Modulator, der weitere Modulator (71) und der Detektor (4) derart eingerichtet sind,
dass die erste modulierte elektromagnetische Welle (2) in die Referenzfluidkammer (42) eintritt, ohne zuvor den Erfassungsraum (3) durchquert zu haben, und in der Referenzfluidkammer (42) eine erste Druck- oder Temperaturwelle gemäß dem ersten Modulationsschema verursacht, und
dass die zweite modulierte elektromagnetische Welle (2') in die Referenzfluidkammer (42) eintritt, nachdem sie den Erfassungsraum (3) durchquert hat, und in der Referenzfluidkammer (42) eine zweite Druck- oder Temperaturwelle gemäß dem zweiten Modulationsschema verursacht,
wobei die Steuereinheit (5) konfiguriert ist, um die Messung der Teilchen im Fluid von einem Einfluss von Intensitätsfluktuationen der emittierten elektromagnetischen Welle auf Grundlage der in der Referenzfluidkammer (42) erfassten ersten Druck- oder Temperaturwelle und der in der Referenzfluidkammer (42) erfassten zweiten Druck- oder Temperaturwelle zu korrigieren.

9. Teilchensensor nach Anspruch 8, wobei der Emitter (1), der Modulator, der weitere Modulator (71) und der Detektor (4) derart eingerichtet sind, dass die erste modulierte elektromagnetische Welle (2) aus der Referenzfluidkammer (42) austritt und als die zweite modulierte elektromagnetische Welle (2) in die Referenzfluidkammer (42) zurückkehrt, wobei der weitere Modulator (71) konfiguriert ist, um die erste modulierte elektromagnetische Welle (2) zu modulieren, nachdem die erste modulierte elektromagnetische Welle (2) die Referenzfluidkammer (42) verlassen hat und bevor die erste oder zweite modulierte elektromagnetische Welle (2, 2') in die Referenzfluidkammer (42) zurückkehrt, um die zweite modulierte elektromagnetisch Welle (2') zu erhalten, wobei die erste und/oder zweite modulierte elektromagnetische Welle (2, 2') den Erfassungsraum (3) durchquert.

10. Teilchensensor nach Anspruch 9, wobei der Emitter (1) in der Referenzfluidkammer (41) eingerichtet ist, wobei ein Reflektor (7) die erste oder zweite modulierte Lichtwelle (2) zurück in die Referenzfluidkammer (42) reflektiert.

11. Teilchensensor nach einem der Ansprüche 1 bis 10, umfassend ein Substrat (6), wobei das Substrat (6) eine Öffnung (61) umfasst, die auf einer zweiten Seite des Substrats (6) durch den Referenzdruck- oder -temperatursensor (41) und an einer ersten Seite des Substrats (6) durch ein Fenster abgedichtet wird, das für mindestens einige Frequenzen der elektromagnetischen Welle (2), die den Erfassungsraum (3) durchquert hat, durchlässig ist, wobei die an beiden Seiten des Substrats (6) abgedichtete Öffnung (61) die mit dem Referenzfluid gefüllt Referenzfluidkammer (42) bildet.

12. Teilchensensor nach einem der Ansprüche 1 bis 11, wobei der Referenzdruck- oder -temperatursensor (41) ein Temperatursensor ist.

13. Teilchensensor nach einem der Ansprüche 1 bis 11, wobei der Referenzdruck- oder -temperatursensor (41) ein Drucksensor ist.

## Revendications

1. Capteur de particules pour détecter ou analyser des particules dans un fluide, le capteur de particules comprenant :
un émetteur (1) pour émettre une onde électromagnétique (2),
un modulateur pour moduler l'onde électromagnétique (2),
un espace de détection (3) pour contenir le fluide ;
un détecteur (4) comprenant une chambre de fluide de référence (42) et un capteur de pression ou de température de référence (41), dans lequel la chambre de fluide de référence (42) contient un fluide de référence, et dans lequel le capteur de pression ou de température de référence (41) est agencé pour capter une onde de pression ou de température du fluide de référence dans la chambre de fluide de référence (42),
un détecteur (4') supplémentaire comprenant une chambre de fluide de référence (42') supplémentaire et un capteur de pression ou de température de référence (41') supplémentaire, dans lequel la chambre de fluide de référence (42') supplémentaire contient un fluide de référence (42') supplémentaire, dans lequel le capteur de pression ou de température de référence (41') supplémentaire est agencé pour capter une onde de pression ou de température supplémentaire du fluide de référence supplémentaire dans la chambre de fluide de référence (42') supplémentaire, et
un dispositif de commande (5) pour détecter ou analyser une particule chimique dans le fluide sur la base de l'onde de pression ou de température captée dans la chambre de fluide de référence (42), dans lequel le dispositif de commande (5) est configuré pour corriger la mesure des particules dans le fluide d'une influence de fluctuations d'intensité de l'onde électromagnétique (2) sur la base de l'onde de pression ou de température captée dans la chambre de fluide de référence (42) et de l'onde de pression ou de température supplémentaire captée dans la chambre de fluide de référence (42') supplémentaire
dans lequel l'émetteur (1) et le détecteur (4) sont agencés de telle manière que l'onde électromagnétique (2) émise traverse l'espace de détection, (3) et de telle manière qu'au moins une partie de l'onde électromagnétique (2) qui a traversé l'espace de détection (3) entre dans la chambre de fluide de référence (42),
dans lequel l'émetteur (1) et le détecteur (4) supplémentaire sont agencés de telle manière que l'onde électromagnétique (2) traverse l'espace de détection (3), et de telle manière qu'au moins une partie de l'onde électromagnétique (2) qui a traversé l'espace de détection (3) entre dans la chambre de fluide de référence (42') supplémentaire,
dans lequel le fluide de référence dans la chambre de fluide de référence (42) comprend la particule chimique devant être détectée ou comprend une autre particule chimique qui présente des caractéristiques d'absorption similaires pour l'onde électromagnétique (2) à la particule chimique devant être détectée,
**caractérisé en ce que**
le fluide de référence supplémentaire dans la chambre de fluide de référence (42') supplémentaire comprend une particule chimique supplémentaire qui n'apparaît pas dans le fluide ou qui absorbe des fréquences de l'onde électromagnétique (2) qui ne sont pas absorbées dans le fluide.

2. Capteur de particules selon la revendication 1, dans lequel le détecteur (4) et le détecteur (4') supplémentaire sont agencés en parallèle de telle manière qu'une première portion de l'onde électromagnétique (2) qui a traversé l'espace de détection (3) entre dans la chambre de fluide de référence (42) et une seconde portion de l'onde électromagnétique (2) qui a traversé l'espace de détection (3) et est différente de la première portion entre dans la chambre de fluide de référence (42') supplémentaire.

3. Capteur de particules selon la revendication 2, dans lequel la première portion de l'onde électromagnétique (2) présente une première longueur de trajet entre l'émetteur (1) et le détecteur (4) qui est égale à une seconde longueur de trajet de la seconde portion de l'onde électromagnétique (2) entre l'émetteur (1) et le détecteur (4') supplémentaire.

4. Capteur de particules selon la revendication 2, dans lequel le capteur de particules est agencé de telle manière que la première portion de l'onde électromagnétique (2) émise par l'émetteur (1) traverse l'espace de détection (3) et entre ensuite dans le détecteur (4), et la seconde portion de l'onde électromagnétique (2) émise par l'émetteur (1) entre dans le détecteur (4') supplémentaire en traversant l'espace de détection (3) avec une longueur de trajet différente avant d'entrer dans le détecteur (4') supplémentaire.

5. Capteur de particules pour détecter ou analyser des particules dans un fluide, le capteur de particules comprenant :
un émetteur (1) pour émettre une onde électromagnétique (2),
un modulateur pour moduler l'onde électromagnétique (2)
un espace de détection (3) pour contenir le liquide devant être analysé ;
un détecteur (4) comprenant une chambre de fluide de référence (42) et un capteur de pression ou de température de référence (41), dans lequel la chambre de fluide de référence (42) contient un fluide de référence, et dans lequel le capteur de pression ou de température de référence (41) est agencé pour capter une onde de pression ou de température du fluide de référence dans la chambre de fluide de référence (42),
un détecteur (4') supplémentaire comprenant une chambre de fluide de référence (42') supplémentaire et un capteur de pression ou de température de référence (41') supplémentaire, dans lequel la chambre de fluide de référence (42') supplémentaire contient un fluide de référence (42') supplémentaire, et dans lequel le capteur de pression ou de température de référence (41') supplémentaire est agencé pour capter une onde de pression ou de température supplémentaire du fluide de référence supplémentaire dans la chambre de fluide de référence (42') supplémentaire, et
un dispositif de commande (5) pour détecter ou analyser une particule chimique dans le fluide sur la base de l'onde de pression ou de température captée dans la chambre de fluide de référence (42), dans lequel le dispositif de commande (5) est configuré pour corriger la mesure des particules dans le fluide d'une influence de fluctuations d'intensité de l'onde électromagnétique sur la base de l'onde de pression ou de température captée dans la chambre de fluide de référence (42) et de l'onde de pression ou de température supplémentaire captée dans la chambre de fluide de référence (42') supplémentaire,
dans lequel l'émetteur (1) et le détecteur (4) sont agencés de telle manière que l'onde électromagnétique (2) émise traverse l'espace de détection (3) et de telle manière qu'au moins une partie de l'onde électromagnétique (2) qui a traversé l'espace de détection (3) entre dans la chambre de fluide de référence (42),
dans lequel le fluide de référence dans la chambre de fluide de référence (42) comprend la particule chimique devant être détectée ou comprend une autre particule chimique qui présente des caractéristiques d'absorption similaires pour l'onde électromagnétique (2) à la particule chimique devant être détectée,
**caractérisé en ce que**
l'émetteur (1) et le détecteur (4') supplémentaire sont agencés de telle manière que l'onde électromagnétique (2) entre dans la chambre de fluide de référence (42') supplémentaire sans traverser l'espace de détection (3).

6. Capteur de particules selon la revendication 5, dans lequel le détecteur (4) et le détecteur (4') supplémentaire sont agencés en parallèle de telle manière qu'une première portion de l'onde électromagnétique (2) qui a traversé l'espace de détection (3) entre dans la chambre de fluide de référence (42) et une seconde portion de l'onde électromagnétique (2) qui a traversé l'espace de détection (3) et est différente de la première portion entre dans la chambre de fluide de référence (42') supplémentaire, dans lequel la seconde portion est insérée directement dans la chambre de fluide (42') supplémentaire sans passer dans l'espace de détection (3).

7. Capteur de particules selon l'une des revendications 1 à 6, dans lequel le dispositif de commande pour détecter les particules dans le fluide est configuré pour détecter la particule chimique indépendamment de fluctuations d'intensité de l'onde électromagnétique sur la base du rapport de l'onde de pression ou de température et de l'onde de pression ou de température supplémentaire.

8. Capteur de particules pour détecter ou analyser des particules dans un fluide, le capteur de particules comprenant :
un émetteur (1) pour émettre une onde électromagnétique (2),
un espace de détection (3) pour contenir le liquide devant être analysé ;
un détecteur (4) comprenant une chambre de fluide de référence (42) et un capteur de pression ou de température de référence (41), dans lequel la chambre de fluide de référence (42) contient un fluide de référence, dans lequel le capteur de pression ou de température de référence (41) est agencé pour capter une onde de pression ou de température du fluide de référence dans la chambre de fluide de référence (42),
un dispositif de commande (5) pour détecter ou analyser une particule chimique dans le fluide sur la base de l'onde de pression ou de température captée dans la chambre de fluide de référence (42), et
un modulateur pour moduler l'onde électromagnétique (2) émise pour obtenir une première onde électromagnétique (2) modulée avec un premier schéma de modulation,
dans lequel l'émetteur (1) et le détecteur (4) sont agencés de telle manière que l'onde électromagnétique (2) émise traverse l'espace de détection, (3) et de telle manière qu'au moins une partie de l'onde électromagnétique (2) qui a traversé l'espace de détection (3) entre dans la chambre de fluide de référence (42),
caractérisé en
un modulateur (71) supplémentaire pour moduler l'onde électromagnétique émise pour obtenir une seconde onde électromagnétique (2') modulée avec un second schéma de modulation,
dans lequel l'émetteur (1), le modulateur, le modulateur (71) supplémentaire et le détecteur (4) sont agencés
de telle manière que la première onde électromagnétique (2) modulée entre dans la chambre de fluide de référence (42) sans être passée dans l'espace de détection (3) avant et provoque dans la chambre de fluide de référence (42) une première onde de pression ou de température selon le premier schéma de modulation, et
de telle manière que la seconde onde électromagnétique (2') modulée entre dans la chambre de fluide de référence (42) après avoir traversé l'espace de détection (3) et provoque dans la chambre de fluide de référence (42) une seconde onde de pression ou de température selon le second schéma de modulation,
dans lequel le dispositif de commande (5) est configuré pour corriger la mesure des particules dans le fluide d'une influence de fluctuations d'intensité de l'onde électromagnétique émise sur la base de la première onde de pression ou de température captée dans la chambre de fluide de référence (42) et de la seconde onde de pression ou de température captée dans la chambre de fluide de référence (42).

9. Capteur de particules selon la revendication 8, dans lequel l'émetteur (1), le modulateur, le modulateur (71) supplémentaire et le détecteur (4) sont agencés de telle manière que la première onde électromagnétique (2) modulée quitte la chambre de fluide de référence (42) et retourne en tant que seconde onde électromagnétique (2) modulée dans la chambre de fluide de référence (42), dans lequel le modulateur (71) supplémentaire est configuré pour moduler la première onde électromagnétique (2) modulée après que la première onde électromagnétique (2) modulée est sortie de la chambre de fluide de référence (42) et avant que la première ou la seconde onde électromagnétique (2, 2') modulée retourne dans la chambre de fluide de référence (42) pour obtenir la seconde onde électromagnétique (2') modulée, dans lequel la première et/ou seconde onde électromagnétique (2, 2') modulée traverse l'espace de détection (3).

10. Capteur de particules selon la revendication 9, dans lequel l'émetteur (1) est agencé dans la chambre de fluide de référence (41), dans lequel un réflecteur (7) réfléchit la première ou la seconde onde lumineuse (2) modulée en la renvoyant dans la chambre de fluide de référence (42).

11. Capteur de particules selon l'une des revendications 1 à 10 comprenant un substrat (6), dans lequel le substrat (6) comprend un trou (61) scellé sur un second côté du substrat (6) par le capteur de pression ou de température de référence (41) et sur un premier côté du substrat (6) par une fenêtre transparente pour au moins certaines fréquences de l'onde électromagnétique (2) qui a traversé l'espace de détection (3), dans lequel le trou (61) scellé sur les deux côtés du substrat (6) forme la chambre de fluide de référence (42) remplie du fluide de référence.

12. Capteur de particules selon l'une des revendications 1 à 11, dans lequel le capteur de pression ou de température de référence (41) est un capteur de température.

13. Capteur de particules selon l'une des revendications 1 à 11, dans lequel le capteur de pression ou de température de référence (41) est un capteur de pression.
